# EUROPEAN PATENT APPLICATION

(11) **EP 4 738 758 A1**
(43) Date of publication of application: **06.05.2026**
(21) Application number: 23942905.3
(22) Date of filing: 29.06.2023
(51) Int. Cl.: H04L 5/20, H04W 76/10

(54) **COMMUNICATION METHODS AND APPARATUSES, AND DEVICES AND STORAGE MEDIUM**

(71) Applicant: Beijing Xiaomi Mobile Software Co., Ltd., Beijing 100085 (CN)
(72) Inventor: CHENG, Yajun, Beijing 100085 (CN)
(74) Representative: Dehns Germany Partnerschaft mbB
(86) International application number: PCT/CN2023/104274
(87) International publication number: WO 2025/000397

(57) **Abstract**

The embodiments of the present disclosure relate to the technical field of communications. Provided are communication methods and apparatuses, and devices and a storage medium. A method comprises: receiving a tunneled direct link setup (TDLS) request frame transmitted by a TDLS initiation device; and transmitting the TDLS request frame to a TDLS response device according to an operation state of the TDLS response device. Provided in the embodiments of the present disclosure can be a method for transmitting a TDLS request frame.

## Description

### TECHNICAL FIELD

The present disclosure relates to the field of communication technologies, and in particular to a communication method and apparatus, a communication device, and a storage medium.

### BACKGROUND

During the Tunneled Direct Link Setup (TDLS) link setup procedure, a TDLS initiator sends a TDLS Setup Request frame to an Access Point (AP) device, and the AP device sends the TDLS Setup Request frame to a TDLS responder. The AP device receives a TDLS Setup Response frame sent by the TDLS responder and forwards it to the TDLS initiator. During this process, the TDLS initiator may be unable to receive the TDLS Setup Response frame, resulting in a failure in the TDLS link setup.

### SUMMARY

Embodiments of the present disclosure provide a communication method and apparatus, a communication device, and a storage medium, which can provide the method for sending the TDLS Setup Request frame.

In a first aspect, embodiments of the present disclosure provide a communication method, the method is performed by an AP device, and includes:
receiving a Tunneled Direct Link Setup (TDLS) Setup Request frame sent by a TDLS initiator; and
sending the TDLS Setup Request frame to a TDLS responder.

In a second aspect, embodiments of the present disclosure provide a communication method, the method is performed by a TDLS responder, and includes:
sending a TDLS Setup Request frame to an Access Point (AP) device.

In a third aspect, embodiments of the present disclosure provide a communication apparatus, which includes:
a first transceiving module, configured to:
receive a Tunneled Direct Link Setup (TDLS) Setup Request frame sent by a TDLS initiator; and
send the TDLS Setup Request frame to a TDLS responder.

In a fourth aspect, embodiments of the present disclosure provide a communication apparatus, which includes:
a second transceiving module, configured to send a TDLS Setup Request frame to an Access Point (AP) device.

In a fifth aspect, embodiments of the present disclosure provide an AP device, including one or more processors;
wherein the AP device is used in the communication method provided in the first aspect of the embodiments of the present disclosure.

In a sixth aspect, embodiments of the present disclosure provide a TDLS initiator, including one or more processors;
wherein the TDLS initiator is used in the communication method provided in the second aspect of the embodiments of the present disclosure.

In a seventh aspect, embodiments of the present disclosure provide a storage medium having instructions stored thereon, wherein the instructions, when running on a communication device, cause the communication device to perform the communication method provided in the first or second aspect of the embodiments of the present disclosure.

In an eighth aspect, embodiments of the present disclosure provide a communication system, including an AP device and a TDLS initiator, wherein the AP device is configured to perform the method described in the first aspect, and the TDLS initiator is configured to perform the method described in the second aspect.

Based on the communication method and apparatus, the communication device, and the storage medium provided in the embodiments of the present disclosure, the TDLS link setup mechanism can be improved.

Additional aspects and advantages of the embodiments of the present disclosure will be set forth in part in the following description, and will become apparent from the following description or may be learned by practice of the present disclosure.

### BRIEF DESCRIPTION OF THE DRAWINGS

To more clearly illustrate the technical solutions of embodiments of the present disclosure, the accompanying drawings used in the description of the embodiments of the present disclosure will be briefly introduced below. Obviously, the accompanying drawings in the following description are only some embodiments of the present disclosure. For those ordinary skilled in the art, other drawings can be obtained based on these drawings without paying creative effort.
FIG. 1 shows a schematic diagram of an architecture of a communication system according to an embodiment of the present disclosure;
FIG. 2 shows a first interactive schematic diagram of TDLS setup according to an embodiment of the present disclosure;
FIG. 3 shows a second interactive schematic diagram of TDLS setup according to an embodiment of the present disclosure;
FIG. 4 shows a first interactive schematic diagram of a communication method according to an embodiment of the present disclosure;
FIG. 5 shows a second interactive schematic diagram of a communication method according to an embodiment of the present disclosure;
FIG. 6 shows a third interactive schematic diagram of a communication method according to an embodiment of the present disclosure;
FIG. 7 shows a fourth interactive schematic diagram of a communication method according to an embodiment of the present disclosure;
FIG. 8 shows a first schematic flowchart of a communication method performed by an AP device according to an embodiment of the present disclosure;
FIG. 9 shows a second schematic flowchart of a communication method performed by an AP device according to an embodiment of the present disclosure;
FIG. 10 shows a third schematic flowchart of a communication method performed by an AP device according to an embodiment of the present disclosure;
FIG. 11 shows a fourth schematic flowchart of a communication method performed by an AP device according to an embodiment of the present disclosure;
FIG. 12 shows a first schematic flowchart of a communication method performed by a TDLS responder according to an embodiment of the present disclosure;
FIG. 13 shows a second schematic flowchart of a communication method performed by a TDLS responder according to an embodiment of the present disclosure;
FIG. 14 shows a third schematic flowchart of a communication method performed by a TDLS responder according to an embodiment of the present disclosure;
FIG. 15 shows a third interactive schematic diagram of TDLS setup according to an embodiment of the present disclosure;
FIGS. 16a to 16b show schematic structural diagrams of communication apparatuses according to embodiments of the present disclosure;
FIG. 17a is a schematic structural diagram of an AP device provided in an embodiment of the present disclosure;
FIG. 17b is a schematic structural diagram of a TDLS responder provided in an embodiment of the present disclosure; and
FIG. 18 is a schematic structural diagram of a communication device provided in an embodiment of the present disclosure.

### DETAILED DESCRIPTION

Embodiments of the present disclosure provide a communication method and apparatus, a communication device, and a storage medium.

In a first aspect, embodiments of the present disclosure provide a communication method, the method is performed by an AP device, and includes:
receiving a Tunneled Direct Link Setup (TDLS) Setup Request frame sent by a TDLS initiator; and
sending the TDLS Setup Request frame to a TDLS responder.

In the above embodiments, the AP device can forward the TDLS Setup Request frame sent by the TDLS initiator to the TDLS responder, so as to realize the transmission of the TDLS Setup Request frame when the TDLS responder and the TDLS initiator cannot directly communicate with each other.

In conjunction with some embodiments of the first aspect, in some embodiments, sending the TDLS Setup Request frame to the TDLS responder includes at least one of:
in a case where the TDLS responder does not operate in an Enhanced Multi-Link Single Radio (EMLSR) mode, directly sending the TDLS Setup Request frame to the TDLS responder;
in a case where the TDLS responder operates in the EMLSR mode and operates in transmit/receive operation, directly sending the TDLS Setup Request frame to the TDLS responder; or
in a case where the TDLS responder operates in the EMLSR mode and operates in listening operation, when all first station devices (STAs) operate(s) in the EMLSR mode and in the listening operation within a first time interval, sending an initial control frame and the TDLS Setup Request frame to the TDLS responder before the end of the first time interval, wherein the initial control frame is configured to trigger the TDLS responder to switch from the listening operation to the transmit/receive operation;
wherein the first STAs include the TDLS responder, the first STAs are affiliated with the same multi-link device, and the first time interval is a time interval corresponding to the current EMLSR transition delay of the TDLS responder.

In the above embodiments, the AP device can determine, according to the mode of the TDLS responder, the method for sending the TDLS Setup Request frame to the TDLS responder. That is, when the TDLS responder does not operate in the EMLSR mode, operates in the EMLSR mode and operates in the transmit/receive operation, or operates in the EMLSR mode and operates in the listening operation, the AP device can take the corresponding mode to send the TDLS Setup Request frame, which is beneficial for the TDLS responder to receive the TDLS Setup Request frame in a timely manner.

In conjunction with some embodiments of the first aspect, in some embodiments, in the case where the TDLS responder operates in the listening operation, the method further includes:
when an end time of the first time interval is later than an end time of a second time interval, sending a first message frame to the TDLS initiator before the end of the second time interval, wherein the first message frame is configured to indicate that the TDLS responder delays sending the TDLS Setup Response frame;
wherein the second time interval is a time interval corresponding to dot11TDLSResponseTimeout of the TDLS initiator.

In the above embodiments, when the end time of the first time interval is later than the end time of the second time interval, the TDLS responder may switch from the listening operation to the transmit/receive operation outside the second time interval, and receive the TDLS Setup Request frame and reply with the TDLS Setup Response frame in the transmit/receive operation. By sending the first message frame before the end of the second time interval, the AP device can notify the TDLS initiator that the TDLS responder will delay sending the TDLS Setup Response frame, thereby enabling the TDLS initiator to receive the TDLS Setup Response frame outside the second time interval, avoiding the failure in the TDLS link setup due to not receiving the TDLS Setup Response frame within the second time interval.

In conjunction with some embodiments of the first aspect, in some embodiments, the initial control frame includes a Multiple User Request to Send trigger frame or a Buffer Status Report Poll trigger frame.

In the above embodiments, the initial control frame can be an existing trigger frame, thereby saving signaling resources.

In conjunction with some embodiments of the first aspect, in some embodiments, the first message frame includes a status code field, and when an identity value of the status code field is a first value, it is configured to indicate that the TDLS responder delays sending the TDLS Setup Response frame.

In the above embodiments, the first message frame can directly indicate, through the identity value of the status code field, that the TDLS responder delays sending the TDLS Setup Response frame, which facilitates to save the decision-making time of the TDLS initiator.

In conjunction with some embodiments of the first aspect, in some embodiments, the first message frame includes a TDLS Multi-Link element field, and the TDLS Multi-Link element field includes at least one of a Multi-Link Device Medium Access Control Address subfield or an Enhanced Multi-Link Capabilities subfield; and
the Multi-Link Device Medium Access Control Address subfield is configured to indicate a medium access control address of a multi-link device to which the TDLS responder is affiliated, and the Enhanced Multi-Link Capabilities subfield is configured to indicate an EMLSR transition delay initially negotiated by the TDLS responder.

In the above embodiments, the AP device can indicate, through the TDLS Multi-Link element field of the first message frame, the medium access control address of the multi-link device to which the TDLS responder is affiliated or the EMLSR transition delay initially negotiated by the TDLS responder, which is beneficial to saving signaling resources.

In conjunction with some embodiments of the first aspect, in some embodiments, the TDLS Multi-Link element field includes a Common Info field, and the Common Info field includes at least one of the multi-link device medium access control subfield or the Enhanced Multi-Link Capabilities subfield.

In conjunction with some embodiments of the first aspect, in some embodiments, the first message frame further includes an Enhanced Multi-Link Control field, and the Enhanced Multi-Link Control field includes an EMLSR parameters update control subfield; and
when an identity value of the EMLSR parameters update control subfield is a second value, it is configured to indicate that the EMLSR transition delay of the TDLS responder is updated, and when the identity value of the EMLSR parameters update control subfield is a third value, it is configured to indicate that the EMLSR transition delay of the TDLS responder is not updated.

In the above embodiments, in a case where the EMLSR transition delay of the TDLS responder is updated, the AP device can also indicate, through the first message frame, whether the EMLSR transition delay has been updated, so as to save signaling resources.

In conjunction with some embodiments of the first aspect, in some embodiments, the first message frame further includes an EMLSR parameters update field, and the EMLSR parameters update field is configured to indicate the updated EMLSR transition delay of the TDLS responder.

In the above embodiments, in a case where the EMLSR transition delay is updated, the AP device can also indicate the updated EMLSR transition delay through the first message frame, which facilitates to maintain the timeliness of the EMLSR transition delay.

In conjunction with some embodiments of the first aspect, in some embodiments, the first message frame is a temporary TDLS Setup Response frame.

In the above embodiments, in a case where the TDLS responder may be unable to send the TDLS Setup Response frame within the second time interval, the AP device can inform the TDLS initiator through the temporary TDLS Setup Response frame to avoid the TDLS initiator terminating the TDLS link setup procedure within the second time interval due to not receiving the TDLS Setup Response frame.

In conjunction with some embodiments of the first aspect, in some embodiments the method further includes:
receiving a TDLS Setup Response frame sent by the TDLS responder; and
sending the TDLS Setup Response frame to the TDLS initiator.

In the above embodiments, the AP device can forward the TDLS Setup Response frame sent by the TDLS responder to the TDLS initiator, so as to realize the transmission of the TDLS Setup Response frame when the TDLS responder and the TDLS initiator cannot directly communicate with each other.

In a second aspect, embodiments of the present disclosure provide a communication method, the method is performed by a TDLS responder, and includes:
sending a TDLS Setup Request frame to an Access Point (AP) device.

In conjunction with some embodiments of the second aspect, in some embodiments, the method further includes at least one of:
when a first message frame and a TDLS Setup Response frame are not received within a second time interval, terminating the TDLS link setup procedure;
when the TDLS Setup Response frame is received within the second time interval, responding to the TDLS Setup Response frame;
when the first message frame is received within the second time interval, and the TDLS Setup Response frame is not received within a first time interval, terminating the TDLS link setup procedure; or
when the first message frame is received within the second time interval and the TDLS Setup Response frame is received within the first time interval, responding to the TDLS Setup Response frame,
wherein, the first time interval is a time interval corresponding to the current EMLSR transition delay of the TDLS responder, and the second time interval is a time interval corresponding to dot11TDLSResponseTimeout of the TDLS initiator; and
the first message frame is configured to indicate that the TDLS responder delays sending the TDLS Setup Response frame.

In the above embodiments, if the TDLS initiator does not receive the first message frame and the TDLS Setup Response frame within the second time interval, it indicates that the TDLS responder has not responded to the TDLS Setup Request frame in a timely manner, or has not received the TDLS Setup Request frame, or has refused to respond to the TDLS Setup Request frame. Therefore, the TDLS initiator can directly terminate the TDLS link setup procedure in this case. When the TDLS initiator receives the TDLS Setup Response frame within the second time interval, it can respond to the TDLS Setup Response frame. When the TDLS initiator receives the first message frame within the second time interval, it indicates that the TDLS responder will delay sending the TDLS Setup Response frame, and thus the TDLS initiator responds to the TDLS Setup Response frame if the TDLS Setup Response frame is received within the first time interval, and terminates the TDLS link setup procedure if the TDLS Setup Response frame is not received within the first time interval.

Based on this method, the subsequent processing method for the TDLS link setup procedure can be determined according to the reception condition of the first message frame and the TDLS Setup Response frame, which is conducive to improving the TDLS link setup mechanism.

In conjunction with some embodiments of the second aspect, in some embodiments, the first message frame includes a status code field, and when an identity value of the status code field is a first value, it is configured to indicate that the TDLS responder delays sending the TDLS Setup Response frame.

In conjunction with some embodiments of the second aspect, in some embodiments, the first message frame includes a TDLS Multi-Link element field, and the TDLS Multi-Link element field includes at least one of a Multi-Link Device Medium Access Control Address subfield or an Enhanced Multi-Link Capabilities subfield; and
the Multi-Link Device Medium Access Control Address subfield is configured to indicate a medium access control address of a multi-link device to which the TDLS responder is affiliated, and the Enhanced Multi-Link Capabilities subfield is configured to indicate an EMLSR transition delay initially negotiated by the TDLS responder.

In conjunction with some embodiments of the second aspect, in some embodiments, the TDLS Multi-Link element field includes a Common Info field, and the Common Info field includes at least one of the multi-link device medium access control subfield or the Enhanced Multi-Link Capabilities subfield.

In conjunction with some embodiments of the second aspect, in some embodiments, the first message frame further includes an Enhanced Multi-Link Control field; and
wherein when an identity value of the Enhanced Multi-Link Control field is a second value, it is configured to indicate that the EMLSR transition delay of the TDLS responder is updated, and when the identity value of the Enhanced Multi-Link Control field is a third value, it is configured to indicate that the EMLSR transition delay of the TDLS responder is been updated.

In conjunction with some embodiments of the second aspect, in some embodiments, the first message frame further includes an EMLSR parameters update field, and the EMLSR parameters update field is configured to indicate the updated EMLSR transition delay of the TDLS responder.

In conjunction with some embodiments of the second aspect, in some embodiments, the first message frame described above is a temporary TDLS Setup Response frame.

In a third aspect, embodiments of the present disclosure provide a communication apparatus, the AP device includes a first transceiving module, configured to perform the first aspect and implementations of the first aspect.

In a fourth aspect, embodiments of the present disclosure provide a communication apparatus, the TDLS initiator includes a first transceiving module, configured to perform the second aspect and implementations of the second aspect.

In a fifth aspect, embodiments of the present disclosure provide an AP device, including one or more processors; wherein the AP device is configured to perform the first aspect and implementations of the first aspect.

In a sixth aspect, embodiments of the present disclosure provide a TDLS initiator, including one or more processors; wherein the TDLS initiator is used to perform the second aspect and implementations of the second aspect.

In a seventh aspect, embodiments of the present disclosure provide a communication system, including an AP device and a TDLS initiator; wherein the AP device is configured to perform the method described in the first aspect and implementations thereof, and the TDLS initiator is configured to perform the method described in the second aspect and implementations thereof.

In an eighth aspect, embodiments of the present disclosure provide a storage medium having instructions stored thereon, wherein the instructions, when running on a communication device, cause the communication device to perform the method described in the first and second aspects, and implementations of the first and second aspects.

In a ninth aspect, embodiments of the present disclosure provide a program product that, when performed by a communication device, causes the communication device to perform the method as described in the first and second aspects, and implementations of the first and second aspects.

In a tenth aspect, embodiments of the present disclosure provide a computer program that, when running on a computer, causes the computer to perform the method described in the first and second aspects, and implementations of the first and second aspects.

In an eleventh aspect, embodiments of the present disclosure provide a chip or chip system. The chip or chip system includes a processing circuit configured to perform the method as described in the first and second aspects, and implementations of the first and second aspects.

It is understood that the communication devices, AP devices, TDLS initiators, communication systems, storage media, program products, computer programs, chips, or chip systems are all used to execute the methods proposed in the embodiments of the present disclosure. Therefore, the beneficial effects they may achieve may be referred to in the corresponding methods, and will not be elaborated upon here.

Embodiments of the present disclosure provide a communication method and apparatus, a communication device, and a storage medium. In some embodiments, terms such as communication method and information processing method and communication method may be used interchangeably, terms such as communication device and information processing device may be used interchangeably, and terms like information processing system and communication system may be used interchangeably.

The embodiments of the present disclosure are not exhaustive, but merely illustrate a part of the embodiments and do not constitute specific limitations on the scope of protection of the present disclosure. In the absence of contradiction, each step in a certain embodiment may be implemented as an independent embodiment, and the steps may be arbitrarily combined. For example, a solution with a part of steps removed from a certain embodiment may also be implemented as an independent embodiment, and the order of the steps in a certain embodiment may be arbitrarily exchanged. In addition, the optional implementations in a certain embodiment may be arbitrarily combined. Additionally, the various embodiments may be arbitrarily combined. For example, a part of or all of the steps of different embodiments may be arbitrarily combined, and a certain embodiment may be arbitrarily combined with the optional implementations of other embodiments.

In various embodiments of the present disclosure, unless otherwise specified or logically conflicting, the terms and/or descriptions among the embodiments are consistent and may be mutually referenced. Technical features in different embodiments may be combined based on their inherent logical relationships to form new embodiments.

The terms used in the embodiments of the present disclosure are for the purpose of describing specific embodiments only, and are not intended to limit the present disclosure.

In the embodiments of the present disclosure, unless otherwise specified, elements expressed in singular forms, such as "a", "an", "the", "above", "said", "aforementioned", "this", etc. may refer to "one and only one", or may refer to "one or more" or "at least one" and the like. For example, when articles such as "a", "an", "the" in English are used in translation, the nouns following these articles may be understood as singular expression forms or plural expression forms.

In the embodiments of the present disclosure, "a plurality of" refers to two or more.

In some embodiments, terms such as "at least one of", "one or more", "a plurality of", and "multiple" may be interchangeable.

In some embodiments, the reciting manners such as "at least one of A and B", "A and/or B", "in one situation A, in another situation B", "in response to one situation A, in response to another situation B" may include the following technical solutions depending on the situation: in some embodiments, A (executing A independently of B); in some embodiments, B (executing B independently of A); in some embodiments, selectively executing A or B (executing A and B selectively); and in some embodiments, A and B (executing both A and B). When there are more branches such as A, B, C, etc., the solution is similar to the above.

In some embodiments, the reciting manners such as "A or B" may include the following technical solutions depending on the situation: in some embodiments, A (executing A independently of B); in some embodiments, B (executing B independently of A); in some embodiments, selectively executing A or B (executing A and B are selectively). When there are more branches such as A, B, C, etc., the solution is similar to the above.

The prefix words such as "first" and "second" in the embodiments of the present disclosure are only used to distinguish different described objects, and do not limit the position, order, priority, number, or content, etc. of the described objects. The description of the described objects may refer to the description in the claims or the context of the embodiments, and should not constitute unnecessary limitations due to the use of the prefix words. For example, if the described object is a "field", then the ordinal number before the "field" in the "first field" and the "second field" does not limit the position or order between the "fields", and "first" and "second" do not limit whether the "fields" they modify are in the same message, nor do they limit the sequential order of the "first field" and the "second field". For another example, if the described object is a "level", then the ordinal number before the "level" in the "first level" and the "second level" does not limit the priority between the "levels". For another example, the number of the described objects is not limited by the ordinal number, and may be one or more. Taking the "first device" as an example, the number of "devices" may be one or more. Furthermore, the objects modified by different prefix words may be the same or different. For example, if the described object is a "device", then the "first device" and the "second device" may be the same device or different devices, and may be of the same type or different types. For another example, if the described object is "information", then the "first information" and the "second information" may be the same information or different information, and may be information of the same content or information of different contents.

In some embodiments, "comprising A", "including A", "used for indicating A", and "carrying A" may be interpreted as directly carrying A, or may be interpreted as indirectly indicating A.

In some embodiments, terms such as "in response to...", "in response to determining...", "in the case of...", "when...", "at the time of...", "if...", "assuming...", etc. may be interchangeable.

In some embodiments, terms such as "greater than", "greater than or equal to", "not less than", "more than", "more than or equal to", "not smaller than", "higher than", "higher than or equal to", "not lower than", "above", etc. may be interchangeable. Terms such as "less than", "less than or equal to", "not greater than", "smaller than" "smaller than or equal to", "not more than", "lower than", "lower than or equal to", "not higher than", "below", etc. may be interchangeable.

In some embodiments, obtaining data, information, etc. may comply with the laws and regulations of the country where it is located.

In some embodiments, data, information, etc. may be obtained after the user consent is obtained.

In addition, each element, each row, or each column in the table of the embodiments of the present disclosure may be implemented as an independent embodiment, and the combination of any element, any row, or any column may also be implemented as an independent embodiment.

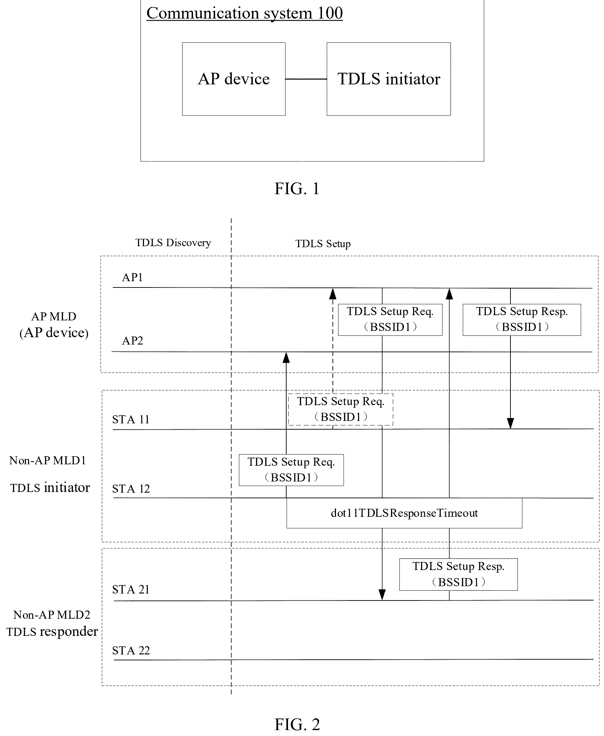

FIG.1 shows a schematic diagram of an architecture of a communication system according to an embodiment of the present disclosure.

As shown in FIG.1, the communication system 100 includes an AP device and a TDLS initiator.

In some embodiments, the TDLS initiator can be a Multi-Link Device (MLD), such as an affiliated STA device of a Non-AP Multi-Link Device (Non-AP MLD).

The MLD includes one or more affiliated stations, which can operate on a single link. These affiliated stations can be either the AP devices or the STA devices. For ease of description, the present disclosure refers to a multi-link device whose affiliated station is the AP device as an AP Multi-Link Device (AP MLD), and a multi-link device whose affiliated station is the STA device as a Non-AP MLD. A Tunneled Direct Link Setup (TDLS) link can be established between MLDs, eliminating the need to realize the P2P communication between STAs through the AP device and avoiding the delay caused by network congestion.

The STA device can be a wireless communication chip, a wireless sensor, or a wireless communication terminal, such as mobile phones supporting a Wireless Fidelity (WiFi) communication function, tablets supporting the WiFi communication function, set-top boxes supporting the WiFi communication function, smart TVs supporting the WiFi communication function, smart wearable devices supporting the WiFi communication function, in-vehicle communication devices supporting the WiFi communication function, and computers supporting the WiFi communication function.

The AP device is also called a wireless access point or a hotspot. The AP device is an access point for a mobile user to access a wired network, and is primarily deployed in a home, a building, and a campus, with a typical coverage radius of tens to hundreds of meters. Alternatively, it can also be deployed outdoors. The AP device acts as a bridge connecting wired and wireless networks, and its main function is to connect various wireless network clients together and then connect the wireless network to the Ethernet. Specifically, the AP device can be a terminal device or network device with a WiFi chip, or a communication device such as a base station, router, gateway, relay, communication server, switch, or bridge with a WiFi chip. The base station can include various forms of macro base stations, micro base stations, and relay nodes.

In some embodiments, the AP device can be a standalone AP device not affiliated with any MLD, or it can be an AP device affiliated with the AP MLD.

Alternatively, the AP MLD can also be regarded as the AP device.

In some embodiments, the communication system shown in FIG.1 can be applied to a Wireless Local Area Network (WLAN). At present, the standard used for the WLAN is the Institute of Electrical and Electronics Engineers (IEEE) 802.11 series. The WLAN may include multiple Basic Service Sets (BSSs), and each BSS may contain one AP device and multiple STA devices associated with that AP device.

It should be understood that the communication system described in the embodiments of the present disclosure is for a clearer explanation of the technical solution of the embodiments of the present disclosure, but does not constitute a limitation on the technical solution proposed in the embodiments of the present disclosure. Those ordinary skilled in the art know that with the evolution of the system architecture and the emergence of new service scenarios, the technical solution proposed in the embodiments of the present disclosure is also applicable to similar technical problems.

The embodiments of the present disclosure described below may be applied to the communication system 100 shown in FIG. 1, or a part of the subjects in the communication system 100, but are not limited thereto. The subjects shown in FIG. 1 are illustrative only. The communication system may include all of or a part of the subjects shown in FIG. 1, or may include subjects other than those shown in FIG. 1. The number and form of each subject are arbitrary, and each subject may be physical or virtual. The connection relationships between the subjects are illustrative. The subjects may not be connected to each other or may be connected to each other. The connection may be in any way, either direct or indirect, wired or wireless.

In embodiments of the present disclosure, the WLAN can improve throughput through the Multi-Link (ML) communication. By means of MLO technologies, multiple links can be established between Non-AP MLDs and AP MLDs across frequency bands, resulting in a significant increase in throughput. Tunneled Direct Link Setup (TDLS) links can be established between MLDs, eliminating the need to realize the peer-to-peer (P2P) communication between STA devices through AP devices and avoiding the delay caused by network congestion.

When the Non-AP MLD is in an Enhanced Multi-link Single Radio (EMLSR) mode, the Non-AP MLD only listens to the channel and receives initial control frames sent by the AP MLD in the Orthogonal Frequency-Division Multiplexing Presentation Protocol Data Unit (PPDU) type and the non-high throughput duplicate PPDU type, such as Multiple User Request to Send (MU-RTS) trigger frames or Buffer Status Report Poll (BSRP) trigger frames. After the affiliated STA device of the Non-AP MLD and its associated AP MLD request to enter the EMLSR mode, the STA device affiliated with the Non-AP MLD enters an active mode or an awake mode, and enters the listening operation to receive initial control frames sent by the AP MLD.

As shown in FIG. 2, when the Non-AP MLD supporting the TDLS discovers a TDLS device within its BSS (such as a BSS corresponding to BSSID1), the TDLS devices (Non-AP MLDs) negotiate to establish TDLS links through TDLS Setup Request frames, TDLS Setup Response frames, and TDLS Setup Confirm frames. During the setup procedure, all three types of frames need to be forwarded through the AP device. If the TDLS initiator does not receive a TDLS Setup Response frame replied by the TDLS responder within a time interval corresponding to dot11TDLSResponseTimeout, or if an identity value of a status code field in the received TDLS Setup Response frame is not equal to SUCCESS, the TDLS initiator shall terminate the TDLS link setup procedure and discard the TDLS Setup Response frame. Otherwise, the TDLS initiator shall send a TDLS Setup Confirm frame to the TDLS responder to confirm the receipt of the TDLS Setup Response frame.

For any affiliated STA device of a Non-AP MLD, when the STA device is in the EMLSR mode, upon receiving the initial control frame, it switches from the listening operation to the transmit/receive operation, thus gaining the ability to transmit/receive data on the corresponding link. When the STA device operates in the transmit/receive operation, other STA devices affiliated with the same Non-AP MLD and operating on the EMLSR link cannot transmit or receive data, and the AP device on the corresponding link cannot send data to the associated STA device.

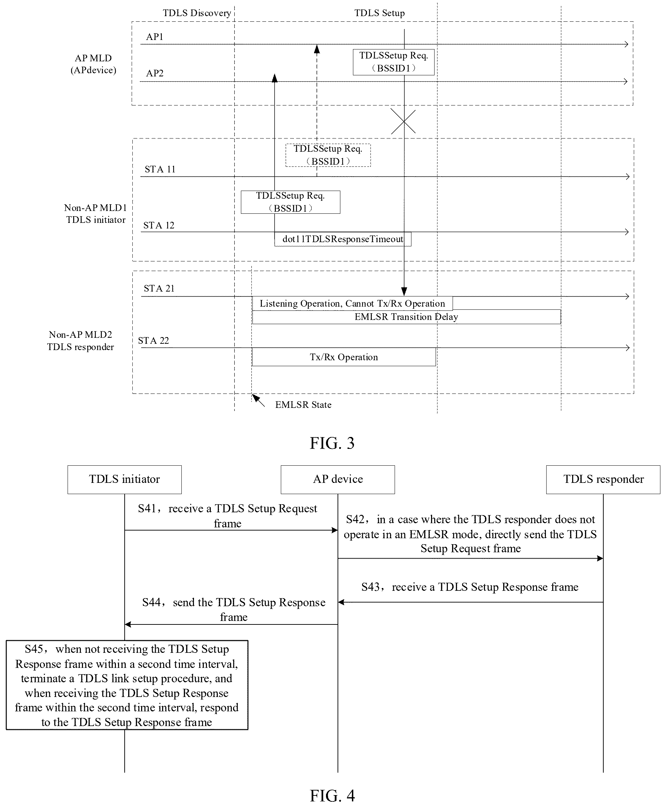

As shown in FIG. 3, when the TDLS initiator shown in FIG. 3 and the TDLS responder identified by the BSSID (e.g., BSSID1) in the Link Identifier field of the TDLS Setup Request frame operates in the EMLSR mode and operates in the listening operation, the AP device associated with this TDLS responder cannot forward the TDLS Setup Response frame to the TDLS responder. The TDLS responder can switch between the listening operation and the transmit/receive operation within the time interval corresponding to the current TDLS transition delay. If the TDLS initiator does not receive the TDLS Setup Response frame within the time interval corresponding to the dot11TDLSResponseTimeout of the TDLS initiator, the TDLS initiator will terminate the TDLS setup procedure. During this procedure, the TDLS responder is prone to not receiving the TDLS Setup Request frame, thus failing to return the TDLS Setup Response frame to the TDLS initiator in a timely manner. In view of this, to improve the TDLS link setup mechanism, the technical solutions in embodiments of the present disclosure will be further described clearly and completely below with reference to the accompanying drawings. Obviously, the described embodiments are only a part of the embodiments of the present disclosure, and not all of the embodiments. Based on the embodiments in the present disclosure, all other embodiments obtained by those skilled in the art without inventive effort are within the protection scope of the present disclosure.

FIG. 4 shows a first interactive schematic diagram of a communication method according to an embodiment of the present disclosure. As shown in FIG. 4, the embodiment of the present disclosure relates to a communication method, which includes steps S41 to S45.

In the step S41, an AP device receives a TDLS Setup Request frame sent by a TDLS initiator.

In some embodiments, the TDLS Setup Request frame is used to request the setup of a TDLS link with a TDLS responder.

In some embodiments, the TDLS Setup Request frame includes identity information that is used to directly or indirectly indicate the TDLS responder that receives the TDLS Setup Request frame.

The identity information may be at least one of: a device identity of the TDLS responder, a Medium Access Control (MAC) address of the TDLS responder, a link identifier of a corresponding link between the TDLS responder and the AP device, or an ID of a basic service set to which the TDLS responder belongs, and the identity information may also be other information that can uniquely identify the TDLS responder, which is not limited here.

In some embodiments, the TDLS Setup Request frame includes a Link Identifier field, which is used to indicate a BSSID of a BSS to which the TDLS responder belongs, and the BSSID can be used to indicate the TDLS responder.

In the step S42, in a case where the TDLS responder does not operate in an EMLSR mode, the AP device directly sends the TDLS Setup Request frame.

In some embodiments, after receiving the TDLS Setup Request frame sent by the TDLS initiator, the AP device can determine whether the TDLS responder is in the EMLSR mode. In the case where the TDLS responder does not operate in the EMLSR mode, the AP device can directly send the TDLS Setup Request frame to the TDLS responder.

In some embodiments, before entering the EMLSR mode, the TDLS responder requests to the AP device to enter the EMLSR state through an EML mode notification frame, and the corresponding link can be referred to as the EMLSR link. For the AP device, if it has previously negotiated the EMLSR link state with the TDLS responder, or has previously received the EML mode notification frame sent by the TDLS responder, then the TDLS responder is determined to be in the EMLSR mode. If the AP device has not previously negotiated the EMLSR link state with the TDLS responder, or has not previously received the EML mode notification frame sent by the TDLS responder, then the TDLS responder is determined not to be in the EMLSR mode.

In the step S43, the AP device receives a TDLS Setup Response frame sent by the TDLS responder.

In some embodiments, the TDLS Setup Response frame is used to respond to the TDLS Setup Request frame, specifically to indicate whether the TDLS responder agrees to establish the TDLS link with the TDLS initiator.

After receiving the TDLS Setup Request frame, the TDLS responder can determine whether to respond to the TDLS Setup Request frame. If the TDLS responder refuses to respond to the TDLS Setup Request frame, it discards the TDLS Setup Request frame. If the TDLS responder responds to the TDLS Setup Request frame, it can send a TDLS Setup Response frame to indicate whether it agrees to or refuses to establish the TDLS link with the TDLS initiator.

In the case where the TDLS responder does not operate in the EMLSR mode, the TDLS responder has no restrictions on transmitting and receiving data. Therefore, the AP device can receive the TDLS Setup Response frame sent directly to the AP device by the TDLS responder.

In some embodiments, the TDLS Setup Request frame includes a status code field. When a field value of the status code field is a first preset field value (such as SUCCESS), it is used to indicate that the TDLS responder agrees to establish the TDLS link with the TDLS initiator. When the field value of the status code field is a second preset field value, it is used to indicate that the TDLS responder refuses to establish the TDLS link with the TDLS initiator.

In the step S44, the AP device sends the TDLS Setup Response frame to the TDLS initiator.

In some embodiments, after receiving the TDLS Setup Response frame sent by the TDLS responder, the AP device may forward the TDLS Setup Response frame to the TDLS initiator.

That is, the TDLS Setup Response frame sent by the TDLS responder needs to be forwarded to the TDLS initiator via the AP device.

In the step S45, when the TDLS initiator does not receive the TDLS Setup Response frame within a second time interval, the TDLS initiator terminates a TDLS link setup procedure, and when the TDLS initiator receives the TDLS Setup Response frame within the second time interval, the TDLS initiator responds to the TDLS Setup Response frame.

In some embodiments, the second time interval is a time interval corresponding to dot11TDLSResponseTimeout of the TDLS initiator.

In some embodiments, after sending the TDLS Setup Request frame, the TDLS initiator may receive the TDLS Setup Response frame within the second time interval.

In some embodiments, when the TDLS initiator does not receive the TDLS Setup Response frame within the second time interval, the TDLS initiator terminates the TDLS link setup procedure.

In some embodiments, when the TDLS initiator receives the TDLS Setup Response frame within the second time interval, the TDLS initiator responds to the TDLS Setup Response frame.

In some embodiments, when the TDLS initiator responds to the TDLS Setup Response frame, if the TDLS Setup Response frame indicates, through the status code field, that the TDLS responder agrees to establish the TDLS link with the TDLS initiator, the TDLS initiator may send the TDLS Setup Confirm frame to the TDLS responder to indicate that it has determined to establish the TDLS link with the TDLS responder.

In some embodiments, when the TDLS initiator responds to the TDLS Setup Response frame, if the TDLS Setup Response frame indicates, through the status code field, that the TDLS responder refuses to establish the TDLS link with the TDLS initiator, the TDLS initiator will terminate the TDLS link setup procedure and discard the TDLS Setup Response frame.

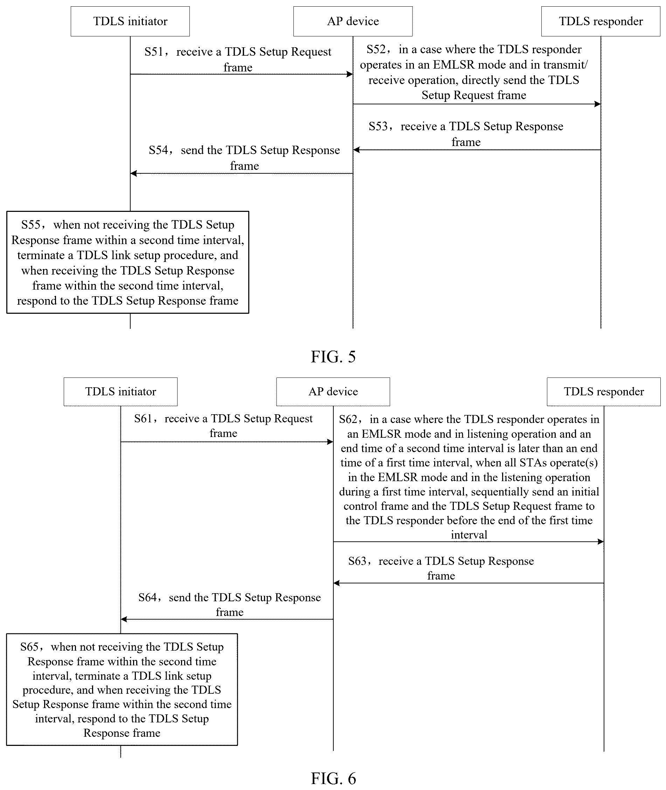

FIG. 5 shows a second interactive schematic diagram of a communication method according to an embodiment of the present disclosure. As shown in FIG. 5, the embodiment of the present disclosure relates to a communication method, which includes steps S51 to S55.

In the step S51, an AP device receives a TDLS Setup Request frame sent by a TDLS initiator.

In some embodiments, the step S51 can be implemented as shown in the step S41 in FIG. 4, which will not be described again here.

In the step S52, in a case where a TDLS responder operates in transmit/receive operation of an EMLSR mode, the AP device directly sends the TDLS Setup Request frame to the TDLS responder.

In some embodiments, after receiving the TDLS Setup Request frame sent by the TDLS initiator, the AP device can determine whether the TDLS responder is in the EMLSR mode. When the TDLS responder is in the EMLSR mode, the AP device can further determine that the TDLS responder operates in the transmit/receive operation or the listening operation.

When the TDLS responder operates in the transmit/receive operation, it has the capability to receive and transmit data. When the TDLS responder operates in the listening operation, it does not have the capability to receive and transmit data, and when the TDLS responder listens to the initial control frame sent by the AP device while operating in the listening operation, it can switch to the transmit/receive operation to operate.

In some embodiments, before entering the EMLSR mode, the TDLS responder requests to the AP device to enter the EMLSR state through an EML mode notification frame, and the corresponding link can be referred to as the EMLSR link. For the AP device, if it has previously negotiated the EMLSR link state with the TDLS responder, or has previously received the EML mode notification frame sent by the TDLS responder, then the TDLS responder is determined to be in the EMLSR mode. If the AP device has not previously negotiated the EMLSR link state with the TDLS responder, or has not previously received the EML mode notification frame sent by the TDLS responder, then the TDLS responder is determined not to be in the EMLSR mode.

Furthermore, if the AP device determines that the TDLS responder is in the EMLSR mode, it can determine whether it has sent the initial control frame to the TDLS responder. If the AP device has not sent the initial control frame to the TDLS responder, the AP device can determine that the TDLS responder operates in the EMLSR mode and operates in the listening operation, and if the AP device has sent the initial control frame to the TDLS responder and a frame exchange procedure with the TDLS responder has not ended, the AP device can determine that the TDLS responder operates in the EMLSR mode and operates in the transmit/receive operation.

In some embodiments, in a case where the AP device determines that the TDLS responder operates in the EMLSR mode and operates in the transmit/receive operation, it may directly send the TDLS Setup Request frame to the TDLS responder.

In the step S53, the AP device receives a TDLS Setup Response frame sent by the TDLS responder.

In some embodiments, the TDLS Setup Response frame is used to respond to the TDLS Setup Request frame, specifically to indicate whether the TDLS responder agrees to establish the TDLS link with the TDLS initiator.

After receiving the TDLS Setup Request frame, the TDLS responder can determine whether to respond to the TDLS Setup Request frame. If the TDLS responder refuses to respond to the TDLS Setup Request frame, it discards the TDLS Setup Request frame. If the TDLS responder responds to the TDLS Setup Request frame, it can determine the TDLS Setup Response frame and use the TDLS Setup Request frame to indicate that it agrees to or refuses to establish the TDLS link with the TDLS initiator.

In a case where the TDLS responder operates in the EMLSR mode and operates in the transmit/receive operation, the TDLS responder has the capability to transmit and receive data. Therefore, the AP device can receive the TDLS Setup Response frame sent directly to the AP device by the TDLS responder.

In some embodiments, the TDLS Setup Request frame includes a status code field. When a field value of the status code field is a first preset field value (such as SUCCESS), it is used to indicate that the TDLS responder agrees to establish the TDLS link with the TDLS initiator. When the field value of the status code field is a second preset field value, it is used to indicate that the TDLS responder refuses to establish the TDLS link with the TDLS initiator.

In the step S54, the AP device sends the TDLS Setup Response frame to the TDLS initiator.

In the step S55, when the TDLS initiator does not receive the TDLS Setup Response frame within a second time interval, the TDLS initiator terminates a TDLS link setup procedure, and when the TDLS initiator receives the TDLS Setup Response frame within the second time interval, the TDLS initiator responds to the TDLS Setup Response frame.

In some embodiments, for the implementation of the steps S54-S55, reference can be made to the implementation shown in the steps S44-S45 of FIG. 4, which will not be repeated here.

FIG. 6 shows a third interactive schematic diagram of a communication method according to an embodiment of the present disclosure. As shown in FIG. 6, the embodiment of the present disclosure relates to a communication method, which includes S61 to S65.

In the step S61, an AP device receives a TDLS Setup Request frame sent by a TDLS initiator.

In some embodiments, the step S61 can be implemented as shown in the step S41 in FIG. 4, which will not be described again here.

In step S62, in a case where a TDLS responder operates in listening operation of an EMLSR mode and an end time of a second time interval is later than an end time of a first time interval, when all STAs operate(s) in the EMLSR mode and in the listening operation during the first time interval, the AP device sends an initial control frame and the TDLS Setup Request frame to the TDLS responder before the end of the first time interval.

In some embodiments, after receiving the TDLS Setup Request frame sent by the TDLS initiator, the AP device can determine whether the TDLS responder is in the EMLSR mode. When the TDLS responder is in the EMLSR mode, the AP device can further determine that the TDLS responder operates in the transmit/receive operation or the listening operation.

When the TDLS responder operates in the transmit/receive operation, it has the capability to receive and transmit data. When the TDLS responder operates in the listening operation, it does not have the capability to receive and transmit data, and when the TDLS responder listens to the initial control frame sent by the AP device while operating in the listening operation, it can switch to the transmit/receive operation to operate.

In some embodiments, before entering the EMLSR mode, the TDLS responder requests to the AP device to enter the EMLSR state through an EML mode notification frame, and the corresponding link can be referred to as the EMLSR link. For the AP device, if it has previously negotiated the EMLSR link state with the TDLS responder, or has previously received the EML mode notification frame sent by the TDLS responder, then the TDLS responder is determined to be in the EMLSR mode. If the AP device has not previously negotiated the EMLSR link state with the TDLS responder, or has not previously received the EML mode notification frame sent by the TDLS responder, then the TDLS responder is determined not to be in the EMLSR mode.

Furthermore, if the AP device determines that the TDLS responder is in the EMLSR mode, it can determine whether it has sent the initial control frame to the TDLS responder. If the AP device has not sent the initial control frame to the TDLS responder, the AP device can determine that the TDLS responder operates in the EMLSR mode and operates in the listening operation, and if the AP device has sent the initial control frame to the TDLS responder and a frame exchange procedure with the TDLS responder has not ended, the AP device can determine that the TDLS responder operates in the EMLSR mode and operates in the transmit/receive operation.

In some embodiments, in a case where the AP device determines that the TDLS responder operates in the EMLSR mode and operates in the listening operation, it further determines whether the end time of the second time interval is later than the end time of the first time interval. In a case where the end time of the second time interval is later than the end time of the first time interval, when all STAs (hereinafter referred to as first STAs for ease of description) operate(s) in the EMLSR mode and in the listening operation during the first time interval, the AP device may send the initial control frame and the TDLS Setup Request frame to the TDLS responder before the end of the first time interval.

In some embodiments, the AP device first sends the initial control frame to the TDLS responder before the end of the first time interval, so that after the TDLS responder switches to the transmit/receive operation, it then sends the TDLS Setup Request frame to the TDLS responder.

In some embodiments, the second time interval is a time interval corresponding to dot11TDLSResponseTimeout of the TDLS initiator.

In some embodiments, the first time interval is a time interval corresponding to the current EMLSR transition delay of the TDLS responder.

In some embodiments, the initial control frame is used to trigger the TDLS responder to switch from the listening operation to the transmit/receive operation.

In some embodiments, in a case where the AP device determines that the TDLS responder operates in the EMLSR mode and operates in the listening operation, it further determines whether the end time corresponding to the dot11TDLSResponseTimeout is later than the end time corresponding to the current EMLSR transition delay of the TDLS responder. In a case where the end time corresponding to the dot11TDLSResponseTimeout of the TDLS initiator is later than the end time corresponding to the current EMLSR transition delay of the TDLS responder, since other first STAs are in the listening operation when any first STA in the EMLSR mode in the MLD to which the TDLS responder belongs operates in the transmit/receive operation, leading to the inability to perform data transmission and reception, the AP device can send the initial control frame to the TDLS responder before the end of the current EMLSR transition delay when all first STAs in the EMLSR mode in the MLD to which the TDLS responder belongs operate in the listening operation within the current EMLSR transition delay, so that the TDLS responder switches from the listening operation to the transmit/receive operation. After sending the initial control frame, the AP device sends the TDLS Setup Request frame to the TDLS responder within the current EMLSR transition delay.

In some embodiments, the first STA includes the TDLS responder, and all first STAs are affiliated with the same MLD.

In some embodiments, the AP device can determine the dot11TDLSResponseTimeout of the TDLS initiator through a second message frame sent by the TDLS initiator.

The second message frame can be any message frame sent by the TDLS initiator to the AP device before sending the TDLS Setup Request frame. The second message frame carries the dot11TDLSResponseTimeout of the TDLS initiator.

In some embodiments, the AP device can make determination through a message frame sent by the TDLS responder during the EMLSR link state negotiation. In some embodiments, this message frame can be an EML mode notification frame.

If the EMLSR transition delay is updated after the TDLS responder sets up the EMLSR link with the AP device, the AP device can receive the message frame sent by the TDLS responder after the EMLSR transition delay is updated. The message frame can indicate the updated EMLSR transition delay through an EMLSR parameters update field.

In the step S63, the AP device receives the TDLS Setup Response frame sent by the TDLS responder.

In some embodiments, the TDLS Setup Response frame is used to respond to the TDLS Setup Request frame, specifically to indicate whether the TDLS responder agrees to establish the TDLS link with the TDLS initiator.

After receiving the TDLS Setup Request frame, the TDLS responder can determine whether to respond to the TDLS Setup Request frame. If the TDLS responder refuses to respond to the TDLS Setup Request frame, it discards the TDLS Setup Request frame. If the TDLS responder responds to the TDLS Setup Request frame, it can determine the TDLS Setup Response frame and use the TDLS Setup Request frame to indicate that it agrees to or refuses to establish the TDLS link with the TDLS initiator.

In a case where the TDLS responder operates in the EMLSR mode and operates in the listening operation, the TDLS responder does not have the capability to transmit and send data. Therefore, the AP device can receive the TDLS Setup Response frame sent to the AP device by the TDLS responder after switching to the transmit/receive operation.

In some embodiments, the TDLS Setup Request frame includes a status code field. When a field value of the status code field is a first preset field value (such as SUCCESS), it is used to indicate that the TDLS responder agrees to establish the TDLS link with the TDLS initiator. When the field value of the status code field is a second preset field value, it is used to indicate that the TDLS responder refuses to establish the TDLS link with the TDLS initiator.

In the step S64, the AP device sends the TDLS Setup Response frame to the TDLS initiator.

In step S65, when the TDLS initiator does not receive the TDLS Setup Response frame within a second time interval, the TDLS initiator terminates a TDLS link setup procedure, and when the TDLS initiator receives the TDLS Setup Response frame within the second time interval, the TDLS initiator responds to the TDLS Setup Response frame.

In some embodiments, for the implementation of the steps S64-S65, reference can be made to the implementation shown in the steps S44-S45 of FIG. 4, which will not be repeated here.

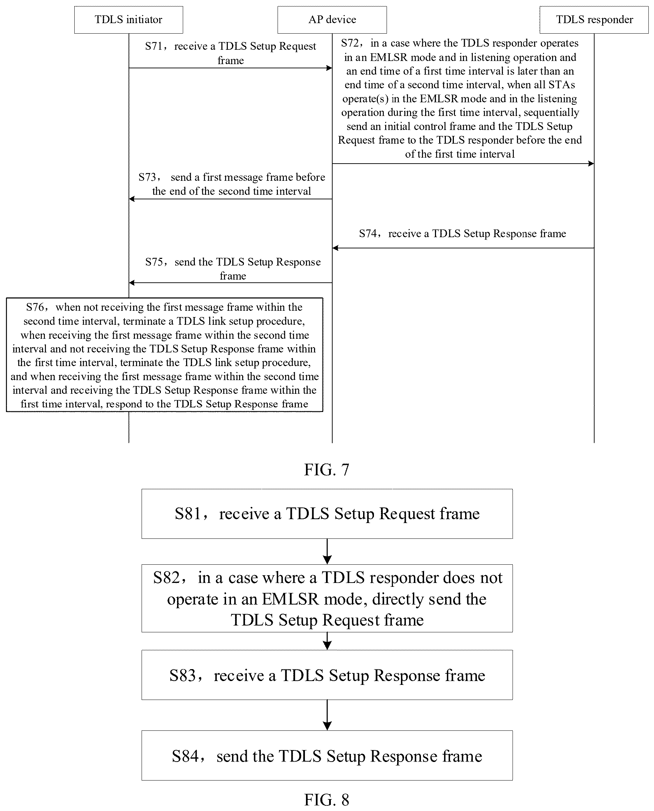

FIG. 7 shows a fourth interactive schematic diagram of a communication method according to an embodiment of the present disclosure. As shown in FIG. 7, the embodiment of the present disclosure relates to a communication method, which includes S71 to S76.

In the step S71, an AP device receives a TDLS Setup Request frame sent by a TDLS initiator.

In some embodiments, the step S71 can be implemented as shown in the step S41 in FIG. 4, which will not be described again here.

In the step S72, in a case where a TDLS responder operates in listening operation of an EMLSR mode and an end time of a first time interval is later than an end time of a second time interval, when all STAs operate(s) in the EMLSR mode and in the listening operation during the first time interval, the AP device sends an initial control frame and the TDLS Setup Request frame to the TDLS responder before the end of the first time interval.

In some embodiments, after receiving the TDLS Setup Request frame sent by the TDLS initiator, the AP device can determine whether the TDLS responder is in the EMLSR mode. When the TDLS responder is in the EMLSR mode, the AP device can further determine that the TDLS responder operates in the transmit/receive operation or the listening operation.

When the TDLS responder operates in the transmit/receive operation, it has the capability to receive and transmit data. When the TDLS responder operates in the listening operation, it does not have the capability to receive and transmit data, and when the TDLS responder listens to the initial control frame sent by the AP device while operating in the listening operation, it can switch to the transmit/receive operation to operate.

In some embodiments, before entering the EMLSR mode, the TDLS responder requests to the AP device to enter the EMLSR state through an EML mode notification frame, and the corresponding link can be referred to as the EMLSR link. For the AP device, if it has previously negotiated the EMLSR link state with the TDLS responder, or has previously received the EML mode notification frame sent by the TDLS responder, then the TDLS responder is determined to be in the EMLSR mode. If the AP device has not previously negotiated the EMLSR link state with the TDLS responder, or has not previously received the EML mode notification frame sent by the TDLS responder, then the TDLS responder is determined not to be in the EMLSR mode.

Furthermore, if the AP device determines that the TDLS responder is in the EMLSR mode, it can determine whether it has sent the initial control frame to the TDLS responder. If the AP device has not sent the initial control frame to the TDLS responder, the AP device can determine that the TDLS responder operates in the EMLSR mode and operates in the listening operation, and if the AP device has sent the initial control frame to the TDLS responder and a frame exchange procedure with the TDLS responder has not ended, the AP device can determine that the TDLS responder operates in the EMLSR mode and operates in the transmit/receive operation.

In some embodiments, in a case where the AP device determines that the TDLS responder operates in the EMLSR mode and operates in the transmit/receive operation, it further determines whether the end time of the first time interval is later than the end time of the second time interval. In a case where the end time of the first time interval is later than the end time of the second time interval, when all STAs (hereinafter referred to as first STAs for ease of description) operate(s) in the EMLSR mode and in the listening operation during the first time interval, the AP device may send the initial control frame and the TDLS Setup Request frame to the TDLS responder before the end of the first time interval.

In some embodiments, the AP device first sends the initial control frame to the TDLS responder before the end of the first time interval, so that after the TDLS responder switches to the transmit/receive operation, it then sends the TDLS Setup Request frame to the TDLS responder.

In some embodiments, the second time interval is a time interval corresponding to dot11TDLSResponseTimeout of the TDLS initiator.

In some embodiments, the first time interval is a time interval corresponding to the current EMLSR transition delay of the TDLS responder.

In some embodiments, the initial control frame is used to trigger the TDLS responder to switch from the listening operation to the transmit/receive operation.

In some embodiments, in a case where the AP device determines that the TDLS responder operates in the EMLSR mode and operates in the listening operation, it further determines whether the end time of the current EMLSR transition delay of the TDLS responder is later than the end time corresponding to the dot11TDLSResponseTimeout of the TDLS responder. In a case where the end time of the current EMLSR transition delay of the TDLS responder is later than the end time corresponding to the dot11TDLSResponseTimeout of the TDLS responder, since other first STAs are in the listening operation when any first STA in the EMLSR mode in the MLD to which the TDLS responder belongs operates in the transmit/receive operation, leading to the inability to perform data transmission and reception, the AP device can send the initial control frame to the TDLS responder before the end of the current EMLSR transition delay when all first STAs in the EMLSR mode in the MLD to which the TDLS responder belongs operate in the listening operation within the current EMLSR transition delay, so that the TDLS responder switches from the listening operation to the transmit/receive operation. After sending the initial control frame, the AP device sends the TDLS Setup Request frame to the TDLS responder within the current EMLSR transition delay.

In some embodiments, the first STA includes the TDLS responder, and all first STAs are affiliated with the same MLD.

In some embodiments, the AP device can determine the dot11TDLSResponseTimeout of the TDLS initiator through a second message frame sent by the TDLS initiator.

The second message frame can be any message frame sent by the TDLS initiator to the AP device before sending the TDLS Setup Request frame. The second message frame carries the dot11TDLSResponseTimeout of the TDLS initiator.

In some embodiments, the AP device can make determination through a message frame sent by the TDLS responder during the EMLSR link state negotiation. In some embodiments, this message frame can be an EML mode notification frame.

If the EMLSR transition delay is updated after the TDLS responder sets up the EMLSR link with the AP device, the AP device can receive the message frame sent by the TDLS responder after the EMLSR transition delay is updated. The message frame can indicate the updated EMLSR transition delay through an EMLSR parameters update field.

In the step S73, the AP device sends a first message frame to the TDLS initiator before the end of the second time interval.

In some embodiments, since other first STAs are in the listening operation when any first STA in the EMLSR mode in the MLD to which the TDLS responder belongs operates in the transmit/receive operation, leading to the inability to perform data transmission and reception, in a case where the end time of the first time interval is later than the end time of the second time interval, the TDLS initiator may not be able to receive the TDLS Setup Response frame before the TDLS responder switches to the transmit/receive operation. Based on this, the AP device may send the first message frame to the TDLS initiator before the end of the second time interval to indicate that the TDLS responder delays sending the TDLS Setup Response frame.

In this case, the TDLS initiator can continue to receive the TDLS Setup Response frame after the second time interval.

In some embodiments, the first message frame can be any message frame that the TDLS initiator can receive in the second time interval.

In some embodiments, the first message frame may be a temporary TDLS Setup Response frame.

In some embodiments, the first message frame includes a Status Code field. When an identity value of the Status Code field is a first value, it is used to indicate that the TDLS responder delays sending the TDLS Setup Response frame.

In some embodiments, the first value can be a preset value such as 142, which is not limited here.

When a field value of the status code field is 142, the corresponding field name is TDLS_Setup_Response_Delay_Due_To_EMLSR, which is used to indicate that since the TDLS responder is in the EMLSR mode and is unable to send data, the TDLS responder may delay sending the TDLS Setup Response frame.

In some embodiments, the first message frame includes a TDLS Multi-Link element field, which includes at least one of a MLD MAC Address subfield or an EML Capabilities subfield.

The MLD MAC Address subfield is used to indicate a MAC address of a Multi-Link Device (MLD) to which the TDLS responder is affiliated. In other words, the field content of the MLD MAC Address subfield is the MAC address of the Multi-Link Device (MLD) to which the TDLS responder is affiliated.

The EML Capabilities subfield is used to indicate EMLSR state information of the TDLS responder.

The EMLSR state information can be an EMLSR transition delay initially negotiated by the EMLSR responder, that is, the EML Capabilities subfield can be used to indicate the EML transition delay initially negotiated by the EMLSR responder.

The EMLSR transition delay initially negotiated by the TDLS responder is an EMLSR transition delay negotiated when the TDLS responder initially enters the EMLSR state.

In some embodiments, the EML Capabilities subfield includes an EMLSR transition delay subfield, and the EMLSR transition delay subfield is used to indicate the EMLSR transition delay initially negotiated by the TDLS responder.

In some embodiments, the first message frame includes a TDLS Multi-Link element field, which includes an MLD MAC Address subfield.

In some embodiments, the first message frame includes a TDLS Multi-Link element field, which includes an EML Capabilities subfield.

In some embodiments, the first message frame includes a TDLS Multi-Link element field, which includes an MLD MAC Address subfield and an EML Capabilities subfield.

In some embodiments, the TDLS Multi-Link element field includes a Common Info field, which includes at least one of the MLD MAC Address subfield or the EML Capabilities subfield.

In some embodiments, the TDLS Multi-Link element field includes a Common Info field, which includes an MLD MAC Address subfield.

In some embodiments, the TDLS Multi-Link element field includes a Common Info field, which includes an EML Capabilities subfield.

In some embodiments, the TDLS Multi-Link element field includes a Common Info field, which includes an MLD MAC Address subfield and an EML Capabilities subfield.

As an example, a field format of the Common Info field of the TDLS Multi-Link element field can be shown as follows:

| | Common | AP MLD MAC | MLD MAC | EML | ... |
|---|---|---|---|---|---|
| | Info Length | Address | Address | Capabilities | |
| Octes: | 1 | 6 | 6 | 2 | |

where the Common Info Length field is used to indicate a length of the Common Info field, and the AP MLD MAC Address field is used to indicate a MAC address of the MLD to which the AP device belongs.

In some embodiments, the first message frame includes an EML Control field, which includes an EMLSR parameters update control subfield. When an identity value of the EMLSR parameters update control subfield is a second value, it is used to indicate that the EMLSR transition delay of the TDLS responder has been updated. When the identity value of the EMLSR parameters update control subfield is a third value, it is used to indicate that the EMLSR transition delay of the TDLS responder has not been updated.

In some embodiments, the second and third values can be different. For example, the second value can be 1 and the third value can be 0.

In some embodiments, the first message frame includes an EML Control field, which includes an EMLSR parameters update control subfield. When an identity value of the EMLSR parameters update control subfield is a second value, it is used to indicate that the EMLSR transition delay of the TDLS responder has been updated.

In some embodiments, the first message frame further includes an EMLSR parameters update field, which is used to indicate the updated EMLSR transition delay of the TDLS responder.

In some embodiments, the first message frame includes an Action field, which includes at least one of a TDLS Multi-Link element field, an EML Control field, or an EMLSR parameters update field.

In some embodiments, the first message frame includes a Multiple User Request to Send (MU-RTS) trigger frame or a Buffer Status Report Poll (BSRP) trigger frame.

In the step S74, the AP device receives the TDLS Setup Response frame sent by the TDLS responder.

In the step S75, the AP device sends the TDLS Setup Response frame to the TDLS initiator.

In some embodiments, for the implementation of the step S74, reference can be made to the implementation shown in the step S63 of FIG. 6, and for the implementation of the step S75, reference can be made to the implementation shown in the step S44 of FIG. 4, which will not be described again here.

In the step S76, when the AP device does not receive the first message frame within the second time interval, the AP device terminates the TDLS link setup procedure, when the AP device receives the first message frame within the second time interval but does not receive the TDLS Setup Response frame within the first time interval, the AP device terminates the TDLS link setup procedure, and when the AP device receives the first message frame within the second time interval and receives the TDLS Setup Response frame within the first time interval, the AP device responds to the TDLS Setup Response frame.

In some embodiments, in a case where the end time of the first time interval is later than the end time of the second time interval, and the AP device sends the first message frame before the end of the second time interval, the TDLS initiator may directly terminate the TDLS link setup procedure when it does not receive the first message frame within the second time interval that is used to indicate that the TDLS responder delays sending the TDLS Setup Response frame.

In some embodiments, in a case where the end time of the first time interval is later than the end time of the second time interval, and the AP device sends the first message frame before the end of the second time interval, the TDLS initiator may directly terminate the TDLS link setup procedure when it receives the first message frame within the second time interval but does not receive the TDLS Setup Response frame within the first time interval.

In some embodiments, in a case where the end time of the first time interval is later than the end time of the second time interval, and the AP device sends the first message frame before the end of the second time interval, the TDLS initiator responds to the TDLS Setup Response frame when it receives the first message frame in the second time interval and receives the TDLS Setup Response frame within the first time interval.

In some embodiments, when the TDLS initiator responds to the TDLS Setup Response frame, if the TDLS Setup Response frame indicates, through the status code field, that the TDLS responder agrees to establish the TDLS link with the TDLS initiator, the TDLS initiator may send the TDLS Setup Confirm frame to the TDLS responder to indicate that it has determined to establish the TDLS link with the TDLS responder.

In some embodiments, when the TDLS initiator responds to the TDLS Setup Response frame, if the TDLS Setup Response frame indicates, through the status code field, that the TDLS responder refuses to establish the TDLS link with the TDLS initiator, the TDLS initiator will terminate the TDLS link setup procedure and discard the TDLS Setup Response frame.

If the TDLS Setup Response frame indicates, through the status code field, that the TDLS responder agrees to establish the TDLS link with the TDLS initiator, the TDLS initiator may send the TDLS Setup Confirm frame to the TDLS responder, and if the TDLS Setup Response frame indicates, through the status code field, that the TDLS responder refuses to establish the TDLS link with the TDLS initiator, the TDLS initiator will terminate the TDLS link setup procedure.

In some embodiments, if the TDLS initiator does not receive the TDLS Setup Response frame within the first time interval, it indicates that the TDLS responder does not send the TDLS Setup Response frame within the first time interval.

In some embodiments, the steps S72 and S73 in FIG. 7 can be performed in an interchangeable order or simultaneously.

For FIGS. 4 to 7, in some embodiments, "acquire", "obtain", "get", "receive", "transmit", "bidirectionally transmit", "send and/or receive" can be used interchangeably, which can be interpreted as receiving from other entities, obtaining from protocols, obtaining from higher layers, obtaining through self-processing, autonomous implementation, and so on.

In some embodiments, terms such as "send", "transmit", "report", "issue", "transfer", "bidirectionally transmit" and "send and/or receive" can be used interchangeably.

In some embodiments, the determination or judgment can be made by a value (0 or 1) represented by one bit, or by a Boolean value represented by true or false, or by a comparison of numerical values (e.g., a comparison with a predetermined value), but is not limited thereto.

In some embodiments, reference can be made to other implementations described before or after the specifications corresponding to FIGS. 4 to 7.

Referring to FIG. 8, which shows a first schematic flowchart of a communication method performed by an AP device according to an embodiment of the present disclosure, the communication method shown in FIG. 8 can be performed by an AP device, and the method includes steps S81 to S84.

In the step S81, the AP device receives a TDLS Setup Request frame sent by a TDLS initiator.

In some embodiments, the TDLS Setup Request frame is used to request the setup of a TDLS link with a TDLS responder.

In some embodiments, the TDLS Setup Request frame includes identity information that is used to directly or indirectly indicate the TDLS responder that receives the TDLS Setup Request frame.

The identity information may be at least one of: a device identity of the TDLS responder, a Medium Access Control (MAC) address of the TDLS responder, a link identifier of a corresponding link between the TDLS responder and the AP device, or an ID of a basic service set to which the TDLS responder belongs, and the identity information may also be other information that can uniquely identify the TDLS responder, which is not limited here.

In some embodiments, the TDLS Setup Request frame includes a Link Identifier field, which is used to indicate a BSSID of a BSS to which the TDLS responder belongs, and the BSSID can be used to indicate the TDLS responder.

In the step S82, in a case where the TDLS responder does not operate in an EMLSR mode, the AP device directly sends the TDLS Setup Request frame to the TDLS responder.

In some embodiments, after receiving the TDLS Setup Request frame sent by the TDLS initiator, the AP device can determine whether the TDLS responder is in the EMLSR mode. In a case where the TDLS responder does not operate in the EMLSR mode, the AP device can directly forward the TDLS Setup Request frame to the TDLS responder.

In some embodiments, after receiving the TDLS Setup Request frame sent by the TDLS initiator, the AP device can determine whether the TDLS responder is in the EMLSR mode. In the case where the TDLS responder does not operate in the EMLSR mode, the AP device can directly send the TDLS Setup Request frame to the TDLS responder.

In some embodiments, before entering the EMLSR mode, the TDLS responder requests to the AP device to enter the EMLSR state through an EML mode notification frame, and the corresponding link can be referred to as the EMLSR link. For the AP device, if it has previously negotiated the EMLSR link state with the TDLS responder, or has previously received the EML mode notification frame sent by the TDLS responder, then the TDLS responder is determined to be in the EMLSR mode. If the AP device has not previously negotiated the EMLSR link state with the TDLS responder, or has not previously received the EML mode notification frame sent by the TDLS responder, then the TDLS responder is determined not to be in the EMLSR mode.

In the step S83, the AP device receives a TDLS Setup Response frame sent by the TDLS responder.

In some embodiments, after receiving the TDLS Setup Response frame sent by the TDLS responder, the AP device may forward the TDLS Setup Response frame to the TDLS initiator.

That is, the TDLS Setup Response frame sent by the TDLS responder needs to be forwarded to the TDLS initiator via the AP device.

In some embodiments, the TDLS Setup Response frame is used to respond to the TDLS Setup Request frame, specifically to indicate whether the TDLS responder agrees to establish the TDLS link with the TDLS initiator.

In some embodiments, the TDLS Setup Request frame includes a status code field. When a field value of the status code field is a first preset field value (such as SUCCESS), it is used to indicate that the TDLS responder agrees to establish the TDLS link with the TDLS initiator. When the field value of the status code field is a second preset field value, it is used to indicate that the TDLS responder refuses to establish the TDLS link with the TDLS initiator.

In the step S84, the AP device sends the TDLS Setup Response frame to the TDLS initiator.

In some embodiments, after receiving the TDLS Setup Response frame sent by the TDLS responder, the AP device may forward the TDLS Setup Response frame to the TDLS initiator.

That is, the TDLS Setup Response frame sent by the TDLS responder needs to be forwarded to the TDLS initiator via the AP device.

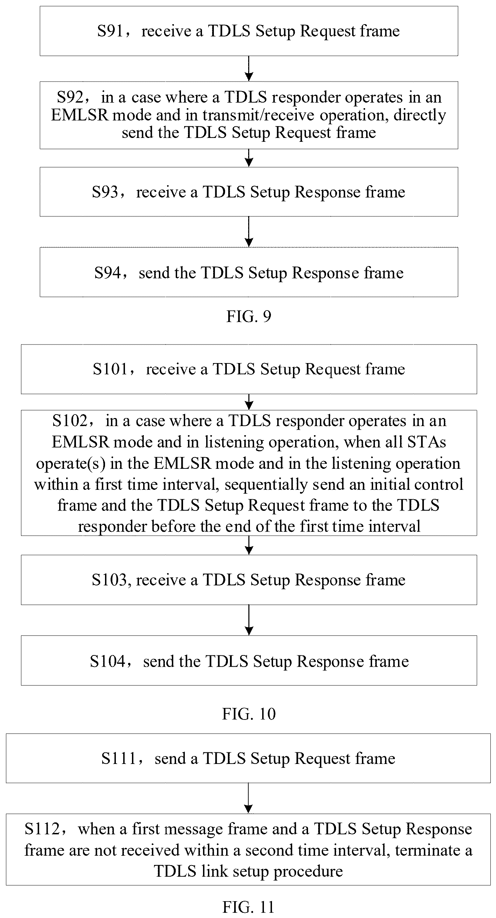

Referring to FIG. 9, which shows a second schematic flowchart of a communication method performed by an AP device according to an embodiment of the present disclosure, the communication method shown in FIG. 9 can be performed by an AP device and include steps S91 to S94.

In the step S91, the AP device receives a TDLS Setup Request frame sent by a TDLS initiator.

In some embodiments, for the implementation of the step S505, reference may be made to the implementation shown in the step S501 of FIG. 5a, which will not be repeated here.

In the step S92, in a case where a TDLS responder operates in transmit/receive operation of an EMLSR mode, the TDLS Setup Request frame is directly sent to the TDLS responder.

In some embodiments, after receiving the TDLS Setup Request frame sent by the TDLS initiator, the AP device can determine whether the TDLS responder is in the EMLSR mode. When the TDLS responder is in the EMLSR mode, the AP device can further determine that the TDLS responder operates in the transmit/receive operation or the listening operation.

When the TDLS responder operates in the transmit/receive operation, it has the capability to receive and transmit data. When the TDLS responder operates in the listening operation, it does not have the capability to receive and transmit data, and when the TDLS responder listens to the initial control frame while operating in the listening operation, it can switch to the transmit/receive operation to operate.

In some embodiments, in a case where the AP device determines that the TDLS responder operates in the EMLSR mode and operates in the transmit/receive operation, it may directly send the TDLS Setup Request frame to the TDLS responder.

In some embodiments, when the TDLS responder operates in the EMLSR mode and operates in the transmit/receive operation, it indicates that the TDLS responder has received the initial control frame sent by any AP device and has switched from the listening operation to the transmit/receive operation.

In the step S93, the AP device receives a TDLS Setup Response frame sent by the TDLS responder.

That is, the TDLS Setup Response frame sent by the TDLS responder needs to be forwarded to the TDLS initiator via the AP device.

In the step S94, the AP device sends the TDLS Setup Response frame to the TDLS initiator.

In some embodiments, for the implementation of the step S93, reference can be made to the implementation shown in the step S83 of FIG. 8, and for the implementation of the step S94, reference can be made to the implementation shown in the step S84 of FIG. 8, which will not be repeated here.

Referring to FIG.10, which shows a third schematic flowchart of a communication method performed by an AP device according to an embodiment of the present disclosure, the communication method shown in FIG.10 can be performed by an AP device, and the method includes steps S101 to S104.

In the step S101, the AP device receives a TDLS Setup Request frame sent by a TDLS initiator.

In some embodiments, for the implementation of the step S101, reference can be made to the implementation shown in the step S81 of FIG. 8, which will not be described again here.

In the step S102, in a case where a TDLS responder operates in listening operation of an EMLSR mode, when all STAs operate(s) in the EMLSR mode and in the listening operation within a first time interval, the AP device sends an initial control frame and the TDLS Setup Request frame to the TDLS responder before the end of the first time interval.

In some embodiments, after receiving the TDLS Setup Request frame sent by the TDLS initiator, the AP device can determine whether the TDLS responder is in the EMLSR mode. When the TDLS responder is in the EMLSR mode, the AP device can further determine that the TDLS responder operates in the transmit/receive operation or the listening operation.

When the TDLS responder operates in the transmit/receive operation, it has the capability to receive and transmit data. When the TDLS responder operates in the listening operation, it does not have the capability to receive and transmit data, and when the TDLS responder listens to the initial control frame sent by the AP device while operating in the listening operation, it can switch to the transmit/receive operation to operate.

In some embodiments, the AP device first sends the initial control frame to the TDLS responder before the end of the first time interval, so that after the TDLS responder switches to the transmit/receive operation, it then sends the TDLS Setup Request frame to the TDLS responder.

In some embodiments, in a case where the AP device determines that the TDLS responder operates in the EMLSR mode and operates in the listening operation, when all STAs (hereinafter referred to as first STAs for ease of description) operate(s) in the EMLSR mode and in the listening operation during the first time interval, the AP device may send the initial control frame and the TDLS Setup Request frame to the TDLS responder before the end of the first time interval.

In some embodiments, before entering the EMLSR mode, the TDLS responder requests to the AP device to enter the EMLSR state through an EML mode notification frame, and the corresponding link can be referred to as the EMLSR link. For the AP device, if it has previously negotiated the EMLSR link state with the TDLS responder, or has previously received the EML mode notification frame sent by the TDLS responder, then the TDLS responder is determined to be in the EMLSR mode. If the AP device has not previously negotiated the EMLSR link state with the TDLS responder, or has not previously received the EML mode notification frame sent by the TDLS responder, then the TDLS responder is determined not to be in the EMLSR mode.

Furthermore, if the AP device determines that the TDLS responder is in the EMLSR mode, it can determine whether it has sent the initial control frame to the TDLS responder. If the AP device has not sent the initial control frame to the TDLS responder, the AP device can determine that the TDLS responder operates in the EMLSR mode and operates in the listening operation, and if the AP device has sent the initial control frame to the TDLS responder and a frame exchange procedure with the TDLS responder has not ended, the AP device can determine that the TDLS responder operates in the EMLSR mode and operates in the transmit/receive operation.

In some embodiments, in a case where a TDLS responder operates in listening operation of an EMLSR mode and an end time of a second time interval is later than an end time of a first time interval, when all first STAs operate(s) in the EMLSR mode and in the listening operation during the first time interval, the AP device sends an initial control frame and the TDLS Setup Request frame to the TDLS responder before the end of the first time interval.

In some embodiments, in a case where a TDLS responder operates in listening operation of an EMLSR mode and an end time of a second time interval is later than an end time of a first time interval, when all first STAs operate(s) in the EMLSR mode and in the listening operation during the first time interval, the initial control frame and the TDLS Setup Request frame are sent to the TDLS responder before the end of the first time interval.

Furthermore, the AP device sends a first message frame to the TDLS initiator before the end of the second time interval.

The first message frame is used to indicate that the TDLS responder delays sending the TDLS Setup Response frame.

The first message frame can be any message frame that the TDLS initiator can receive in the second time interval. In some embodiments, the first message frame may be a temporary TDLS Setup Response frame.

In some embodiments, for the relevant description of the first message frame, reference can be made to the relevant description shown in the step S73 of FIG. 7, which will not be repeated here.

In some embodiments, the second time interval is a time interval corresponding to dot11TDLSResponseTimeout of the TDLS initiator.

In some embodiments, the first time interval is a time interval corresponding to the current EMLSR transition delay of the TDLS responder.

In some embodiments, the initial control frame is used to trigger the TDLS responder to switch from the listening operation to the transmit/receive operation.

In some embodiments, the first STA includes the TDLS responder, and all first STAs are affiliated with the same MLD.

In some embodiments, in a case where the AP device determines that the TDLS responder operates in the EMLSR mode and operates in the listening operation, since other first STAs are in the listening operation when any first STA in the EMLSR mode in the MLD to which the TDLS responder belongs operates in the transmit/receive operation, leading to the inability to perform data transmission and reception, the AP device can send the initial control frame to the TDLS responder before the end of the current EMLSR transition delay when all first STAs in the EMLSR mode in the MLD to which the TDLS responder belongs operate in the listening operation within the current EMLSR transition delay, so that the TDLS responder switches from the listening operation to the transmit/receive operation. After sending the initial control frame, the AP device sends the TDLS Setup Request frame to the TDLS responder within the current EMLSR transition delay.

In some embodiments, the AP device can determine the dot11TDLSResponseTimeout of the TDLS initiator through a second message frame sent by the TDLS initiator.

The second message frame can be any message frame sent by the TDLS initiator to the AP device before sending the TDLS Setup Request frame. The second message frame carries the dot11TDLSResponseTimeout of the TDLS initiator.

In some embodiments, the AP device can make determination through a message frame sent by the TDLS responder during the EMLSR link state negotiation. In some embodiments, this message frame can be an EML mode notification frame.

If the EMLSR transition delay is updated after the TDLS responder sets up the EMLSR link with the AP device, the AP device can receive the message frame sent by the TDLS responder after the EMLSR transition delay is updated. The message frame can indicate the updated EMLSR transition delay through an EMLSR parameters update field.

In some embodiments, the steps of the AP device sending the first message frame to the TDLS initiator and the step S102 can be performed in an interchangeable order or simultaneously.

In the step S103, the AP device receives the TDLS Setup Response frame sent by the TDLS responder.

In the step S104, the AP device sends the TDLS Setup Response frame to the TDLS initiator.

In some embodiments, for the implementation of the step S103, reference can be made to the implementation shown in the step S83 of FIG. 8, and for the implementation of the step S104, reference can be made to the implementation shown in the step S84 of FIG. 8, which will not be repeated here.

Referring to FIG.11, which shows a fourth schematic flowchart of a communication method performed by an AP device according to an embodiment of the present disclosure, the communication method shown in FIG.11 can be performed by a TDLS initiator, and include steps S111 to S114.

In the step S111, the TDLS initiator sends a TDLS Setup Request frame to an AP device.

In some embodiments, the TDLS Setup Request frame is used to request the setup of a TDLS link with a TDLS responder.

In some embodiments, the TDLS Setup Request frame includes identity information that is used to directly or indirectly indicate the TDLS responder that receives the TDLS Setup Request frame.

The identity information may be at least one of: a device identity of the TDLS responder, a MAC address of the TDLS responder, a link identifier of a corresponding link between the TDLS responder and the AP device, or an ID of a basic service set to which the TDLS responder belongs, and the identity information may also be other information that can uniquely identify the TDLS responder, which is not limited here.

In some embodiments, the TDLS Setup Request frame includes a Link Identifier field, which is used to indicate a BSSID of a BSS to which the TDLS responder belongs, and the BSSID can be used to indicate the TDLS responder.

In some embodiments, the TDLS Setup Request frame is forwarded by the AP device to the TDLS responder. When responding to the TDLS Setup Request frame, the TDLS responder may send the TDLS Setup Response frame to the AP device, and the AP device may send the TDLS Setup Response frame to the TDLS initiator.

In the step S112, when a first message frame and a TDLS Setup Response frame are not received within a second time interval, the TDLS initiator terminates a TDLS link setup procedure.

In some embodiments, in a case where the TDLS responder does not operate in the EMLSR mode or operates in the EMLSR mode and operates in the transmit/receive operation, the AP device directly sends the TDLS Setup Request frame to the TDLS responder and receives the TDLS Setup Response frame sent by the TDLS responder. When the TDLS responder operates in the EMLSR mode and operates in the listening operation and all first STAs operate(s) in the EMLSR mode and in the listening operation within the first time interval, the AP device sends the initial control frame and the TDLS Setup Request frame to the TDLS responder before the end of the first time interval, and in a case where the end time of the first time interval is later than the end time of the second time interval, the AP device sends the first message frame to the TDLS initiator before the end of the second time interval.

The second time interval is a time interval corresponding to dot11TDLSResponseTimeout of the TDLS initiator.

The first time interval is a time interval corresponding to the current EMLSR transition delay of the TDLS responder.

The initial control frame is used to trigger the TDLS responder to switch from the listening operation to the transmit/receive operation.

The first STA includes the TDLS responder, and all first STAs are affiliated with the same MLD.

In this case, when the TDLS initiator does not receive the TDLS Setup Response frame or the first message frame within the second time interval, it indicates that the TDLS responder does not receive the TDLS Setup Request frame in a timely manner or does not respond to the TDLS Setup Request frame under any of the above circumstances. In this case, the TDLS initiator can terminate the TDLS link setup procedure.

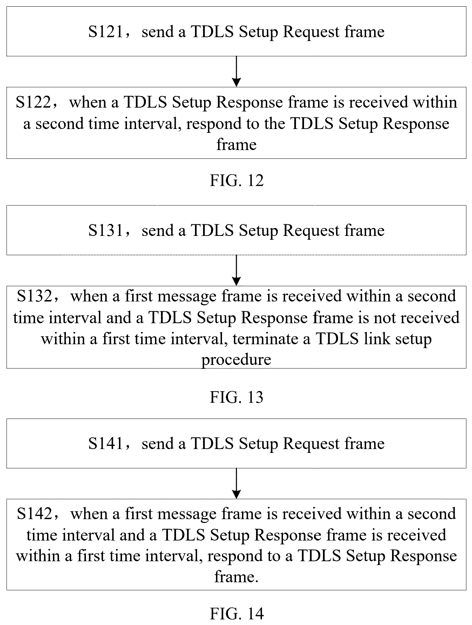

Referring to FIG.12, which shows a first schematic flowchart of a communication method performed by a TDLS responder according to an embodiment of the present disclosure, the communication method shown in FIG.12 can be performed by a TDLS initiator, and include steps S121 to S122.

In the step S121, the TDLS initiator sends a TDLS Setup Request frame to an AP device.

In some embodiments, for the implementation of the step S121, reference can be made to the implementation shown in the step S111 in FIG.11, which will not be repeated here.

In the step S122, when a TDLS Setup Response frame is received within a second time interval, the TDLS initiator responds to the TDLS Setup Response frame.

In some embodiments, in a case where the TDLS responder does not operate in the EMLSR mode or operates in the EMLSR mode and operates in the transmit/receive operation, the AP device directly sends the TDLS Setup Request frame to the TDLS responder and receives the TDLS Setup Response frame sent by the TDLS responder. When the TDLS responder operates in the EMLSR mode and operates in the listening operation and all first STAs operate(s) in the EMLSR mode and in the listening operation within the first time interval, the AP device sends the initial control frame and the TDLS Setup Request frame to the TDLS responder before the end of the first time interval, and in a case where the end time of the first time interval is later than the end time of the second time interval, the AP device sends the first message frame to the TDLS initiator before the end of the second time interval.

The second time interval is a time interval corresponding to dot11TDLSResponseTimeout of the TDLS initiator.

The first time interval is a time interval corresponding to the current EMLSR transition delay of the TDLS responder.

The initial control frame is used to trigger the TDLS responder to switch from the listening operation to the transmit/receive operation.

The first STA includes the TDLS responder, and all first STAs are affiliated with the same MLD.

In this case, if the TDLS initiator receives the TDLS Setup Response frame within the second time interval, it indicates that the TDLS responder has responded to the TDLS Setup Request frame. In this case, the TDLS initiator can respond to the TDLS Setup Response frame.

In some embodiments, when the TDLS initiator responds to the TDLS Setup Response frame, if the TDLS Setup Response frame indicates, through the status code field, that the TDLS responder agrees to establish the TDLS link with the TDLS initiator, the TDLS initiator may send the TDLS Setup Confirm frame to the TDLS responder to indicate that it has determined to establish the TDLS link with the TDLS responder.

In some embodiments, when the TDLS initiator responds to the TDLS Setup Response frame, if the TDLS Setup Response frame indicates, through the status code field, that the TDLS responder refuses to establish the TDLS link with the TDLS initiator, the TDLS initiator will terminate the TDLS link setup procedure and discard the TDLS Setup Response frame.

Referring to FIG.13, which shows a second schematic flowchart of a communication method performed by a TDLS responder according to an embodiment of the present disclosure, the communication method shown in FIG.13 can be applied to a TDLS initiator, and includes steps S131 and S132.

In the step S131, the TDLS initiator sends a TDLS Setup Request frame to an AP device.

In some embodiments, for the implementation of the step S131, reference can be made to the implementation shown in the step S111 in FIG.11, which will not be repeated here.

In the step S132, when a first message frame is received within a second time interval and a TDLS Setup Response frame is not received in a first time interval, the TDLS initiator terminates a TDLS link setup procedure.

In some embodiments, if the TDLS initiator receives the first message frame within the second time interval, it indicates that when the TDLS responder operates in the EMLSR mode and operates in the listening operation and all first STAs operate(s) in the EMLSR mode and in the listening operation within the first time interval, the AP device sends the initial control frame and the TDLS Setup Request frame to the TDLS responder before the end of the first time interval, and in a case where the end time of the first time interval is later than the end time of the second time interval, the AP device sends the first message frame to the TDLS initiator before the end of the second time interval.

The second time interval is a time interval corresponding to dot11TDLSResponseTimeout of the TDLS initiator.

The first time interval is a time interval corresponding to the current EMLSR transition delay of the TDLS responder.

The initial control frame is used to trigger the TDLS responder to switch from the listening operation to the transmit/receive operation.

The first STA includes the TDLS responder, and all first STAs are affiliated with the same MLD.

In this case, if the TDLS initiator receives the first message frame within the second time interval, it can determine that the TDLS responder may delay sending the TDLS Setup Response frame before the end of the first time interval. The TDLS initiator further determines the first time interval and waits to receive the TDLS Setup Response frame sent by the TDLS responder before the end of the first time interval.

If the TDLS initiator does not further receive the TDLS Setup Response frame before the end of the first time interval, it indicates that the TDLS responder does not receive the TDLS Setup Request frame in a timely manner or does not respond to the TDLS Setup Request frame. In this case, the TDLS initiator can terminate the TDLS link setup procedure.

In some embodiments, the first message frame can be any message frame that the TDLS initiator can receive in the second time interval.

In some embodiments, the first message frame may be a temporary TDLS Setup Response frame.

In some embodiments, the first message frame includes a Status Code field. When an identity value of the Status Code field is a first value, it is used to indicate that the TDLS responder delays sending the TDLS Setup Response frame.

In some embodiments, the first value can be a preset value such as 142, which is not limited here.

When a field value of the status code field is 142, the corresponding field name is TDLS_Setup_Response_Delay_Due_To_EMLSR, which is used to indicate that since the TDLS responder is in the EMLSR mode and is unable to send data, the TDLS responder may delay sending the TDLS Setup Response frame.

In some embodiments, the first message frame includes a TDLS Multi-Link element field, which includes at least one of a MLD MAC Address subfield or an EML Capabilities subfield.

The MLD MAC Address subfield is used to indicate a MAC address of a Multi-Link Device (MLD) to which the TDLS responder is affiliated. In other words, the field content of the MLD MAC Address subfield is the MAC address of the Multi-Link Device (MLD) to which the TDLS responder is affiliated.

The EML Capabilities subfield is used to indicate EMLSR state information of the TDLS responder.

The EMLSR state information can be an EMLSR transition delay initially negotiated by the EMLSR responder, that is, the EML Capabilities subfield can be used to indicate the EML transition delay initially negotiated by the EMLSR responder.

The EMLSR transition delay initially negotiated by the TDLS responder is an EMLSR transition delay negotiated when the TDLS responder initially enters the EMLSR state.

In some embodiments, the EML Capabilities subfield includes an EMLSR transition delay subfield, and the EMLSR transition delay subfield is used to indicate the EMLSR transition delay initially negotiated by the TDLS responder.

In some embodiments, the first message frame includes a TDLS Multi-Link element field, which includes an MLD MAC Address subfield.

In some embodiments, the first message frame includes a TDLS Multi-Link element field, which includes an EML Capabilities subfield.

In some embodiments, the first message frame includes a TDLS Multi-Link element field, which includes an MLD MAC Address subfield and an EML Capabilities subfield.

In some embodiments, the TDLS Multi-Link element field includes a Common Info field, which includes at least one of the MLD MAC Address subfield or the EML Capabilities subfield.

In some embodiments, the TDLS Multi-Link element field includes a Common Info field, which includes an MLD MAC Address subfield.

In some embodiments, the TDLS Multi-Link element field includes a Common Info field, which includes an EML Capabilities subfield.

In some embodiments, the TDLS Multi-Link element field includes a Common Info field, which includes an MLD MAC Address subfield and an EML Capabilities subfield.

As an example, a field format of the Common Info field of the TDLS Multi-Link element field can be shown as follows:

| | Common | AP MLD MAC | MLD MAC | EML | ... |
|---|---|---|---|---|---|
| | Info Length | Address | Address | Capabilities | |
| Octes: | 1 | 6 | 6 | 2 | |

where the Common Info Length field is used to indicate a length of the Common Info field, and the AP MLD MAC Address field is used to indicate a MAC address of the MLD to which the AP device belongs.

In some embodiments, the first message frame includes an EML Control field, which includes an EMLSR parameters update control subfield. When an identity value of the EMLSR parameters update control subfield is a second value, it is used to indicate that the EMLSR transition delay of the TDLS responder has been updated. When the identity value of the EMLSR parameters update control subfield is a third value, it is used to indicate that the EMLSR transition delay of the TDLS responder has not been updated.

In some embodiments, the second and third values can be different. For example, the second value can be 1 and the third value can be 0.

In some embodiments, the first message frame includes an EML Control field, which includes an EMLSR parameters update control subfield. When an identity value of the EMLSR parameters update control subfield is a second value, it is used to indicate that the EMLSR transition delay of the TDLS responder has been updated.

In some embodiments, the first message frame further includes an EMLSR parameters update field, which is used to indicate the updated EMLSR transition delay of the TDLS responder.

In some embodiments, the first message frame includes an Action field, which includes at least one of a TDLS Multi-Link element field, an EML Control field, or an EMLSR parameters update field.

In some embodiments, the first message frame includes a Multiple User Request to Send (MU-RTS) trigger frame or a Buffer Status Report Poll (BSRP) trigger frame.

In some embodiments, after receiving the first message frame, the TDLS initiator may determine the first time interval based on the first message frame.

In a case where the EMLSR transition delay initially negotiated by the TDLS responder has not been updated, the TDLS initiator may determine a time interval corresponding to the EMLSR transition delay initially negotiated by the TDLS responder in the first message frame as the first time interval.

In a case where the EMLSR transition delay initially negotiated by the TDLS responder has been updated, the TDLS initiator can determine a time interval corresponding to the updated EMLSR transition delay of the TDLS responder in the first message frame as the first time interval.

Referring to FIG. 14, which shows a third schematic flowchart of a communication method performed by a TDLS responder according to an embodiment of the present disclosure, the communication method shown in FIG.14 can be performed by a TDLS initiator, and include steps S141 and S142.

In the step S141, the TDLS initiator sends a TDLS Setup Request frame to an AP device.

In some embodiments, for the implementation of the step S141, reference can be made to the implementation shown in the step S111 in FIG.11, which will not be repeated here.

In the step S142, when a first message frame is received within a second time interval and the TDLS Setup Response frame is received within the first time interval, the TDLS initiator responds to the TDLS Setup Response frame.

In some embodiments, if the TDLS initiator receives the first message frame within the second time interval, it indicates that when the TDLS responder operates in the EMLSR mode and operates in the listening operation and all first STAs operate(s) in the EMLSR mode and in the listening operation within the first time interval, the AP device sends the initial control frame and the TDLS Setup Request frame to the TDLS responder before the end of the first time interval, and in a case where the end time of the first time interval is later than the end time of the second time interval, the AP device sends the first message frame to the TDLS initiator before the end of the second time interval.

The second time interval is a time interval corresponding to dot11 TDLSResponseTimeout of the TDLS initiator.

The first time interval is a time interval corresponding to the current EMLSR transition delay of the TDLS responder.

The initial control frame is used to trigger the TDLS responder to switch from the listening operation to the transmit/receive operation.

The first STA includes the TDLS responder, and all first STAs are affiliated with the same MLD.

In this case, if the TDLS initiator receives the first message frame within the second time interval, it can determine that the TDLS responder may delay sending the TDLS Setup Response frame before the end of the first time interval. The TDLS initiator further determines the first time interval and waits to receive the TDLS Setup Response frame sent by the TDLS responder before the end of the first time interval.

If the TDLS initiator further receives the TDLS Setup Response frame before the end of the first time interval, it indicates that the TDLS responder has responded to the TDLS Setup Request frame. In this case, the TDLS initiator can respond to the TDLS Setup Response frame.

In some embodiments, when the TDLS initiator responds to the TDLS Setup Response frame, if the TDLS Setup Response frame indicates, through the status code field, that the TDLS responder agrees to establish the TDLS link with the TDLS initiator, the TDLS initiator may send the TDLS Setup Confirm frame to the TDLS responder to indicate that it has determined to establish the TDLS link with the TDLS responder.

In some embodiments, when the TDLS initiator responds to the TDLS Setup Response frame, if the TDLS Setup Response frame indicates, through the status code field, that the TDLS responder refuses to establish the TDLS link with the TDLS initiator, the TDLS initiator will terminate the TDLS link setup procedure and discard the TDLS Setup Response frame.

In some embodiments, the first message frame can be any message frame that the TDLS initiator can receive in the second time interval.

In some embodiments, the first message frame may be a temporary TDLS Setup Response frame.

In some embodiments, the first message frame includes a Status Code field. When an identity value of the Status Code field is a first value, it is used to indicate that the TDLS responder delays sending the TDLS Setup Response frame.

In some embodiments, the first value can be a preset value such as 142, which is not limited here.

When a field value of the status code field is 142, the corresponding field name is TDLS_Setup_Response_Delay_Due_To_EMLSR, which is used to indicate that since the TDLS responder is in the EMLSR mode and is unable to send data, the TDLS responder may delay sending the TDLS Setup Response frame.

In some embodiments, the first message frame includes a TDLS Multi-Link element field, which includes at least one of a MLD MAC Address subfield or an EML Capabilities subfield.

The MLD MAC Address subfield is used to indicate a MAC address of a Multi-Link Device (MLD) to which the TDLS responder is affiliated. In other words, the field content of the MLD MAC Address subfield is the MAC address of the Multi-Link Device (MLD) to which the TDLS responder is affiliated.

The EML Capabilities subfield is used to indicate EMLSR state information of the TDLS responder.

The EMLSR state information can be an EMLSR transition delay initially negotiated by the EMLSR responder, that is, the EML Capabilities subfield can be used to indicate the EML transition delay initially negotiated by the EMLSR responder.

The EMLSR transition delay initially negotiated by the TDLS responder is an EMLSR transition delay negotiated when the TDLS responder initially enters the EMLSR state.

In some embodiments, the EML Capabilities subfield includes an EMLSR transition delay subfield, and the EMLSR transition delay subfield is used to indicate the EMLSR transition delay initially negotiated by the TDLS responder.

In some embodiments, the first message frame includes a TDLS Multi-Link element field, which includes an MLD MAC Address subfield.

In some embodiments, the first message frame includes a TDLS Multi-Link element field, which includes an EML Capabilities subfield.

In some embodiments, the first message frame includes a TDLS Multi-Link element field, which includes an MLD MAC Address subfield and an EML Capabilities subfield.

In some embodiments, the TDLS Multi-Link element field includes a Common Info field, which includes at least one of the MLD MAC Address subfield or the EML Capabilities subfield.

In some embodiments, the TDLS Multi-Link element field includes a Common Info field, which includes an MLD MAC Address subfield.

In some embodiments, the TDLS Multi-Link element field includes a Common Info field, which includes an EML Capabilities subfield.

In some embodiments, the TDLS Multi-Link element field includes a Common Info field, which includes an MLD MAC Address subfield and an EML Capabilities subfield.

As an example, a field format of the Common Info field of the TDLS Multi-Link element field can be shown as follows:

| | Common | AP MLD MAC | MLD MAC | EML | ... |
|---|---|---|---|---|---|
| | Info Length | Address | Address | Capabilities | |
| Octes: | 1 | 6 | 6 | 2 | |

where the Common Info Length field is used to indicate a length of the Common Info field, and the AP MLD MAC Address field is used to indicate a MAC address of the MLD to which the AP device belongs.

In some embodiments, the first message frame includes an EML Control field, which includes an EMLSR parameters update control subfield. When an identity value of the EMLSR parameters update control subfield is a second value, it is used to indicate that the EMLSR transition delay of the TDLS responder has been updated. When the identity value of the EMLSR parameters update control subfield is a third value, it is used to indicate that the EMLSR transition delay of the TDLS responder has not been updated.

In some embodiments, the second and third values can be different. For example, the second value can be 1 and the third value can be 0.

In some embodiments, the first message frame includes an EML Control field, which includes an EMLSR parameters update control subfield. When an identity value of the EMLSR parameters update control subfield is a second value, it is used to indicate that the EMLSR transition delay of the TDLS responder has been updated.

In some embodiments, the first message frame further includes an EMLSR parameters update field, which is used to indicate the updated EMLSR transition delay of the TDLS responder.

In some embodiments, the first message frame includes an Action field, which includes at least one of a TDLS Multi-Link element field, an EML Control field, or an EMLSR parameters update field.

In some embodiments, the first message frame includes a Multiple User Request to Send (MU-RTS) trigger frame or a Buffer Status Report Poll (BSRP) trigger frame.

In some embodiments, after receiving the first message frame, the TDLS initiator may determine the first time interval based on the first message frame.

In a case where the EMLSR transition delay initially negotiated by the TDLS responder has not been updated, the TDLS initiator may determine a time interval corresponding to the EMLSR transition delay initially negotiated by the TDLS responder in the first message frame as the first time interval.

In a case where the EMLSR transition delay initially negotiated by the TDLS responder has been updated, the TDLS initiator can determine a time interval corresponding to the updated EMLSR transition delay of the TDLS responder in the first message frame as the first time interval.

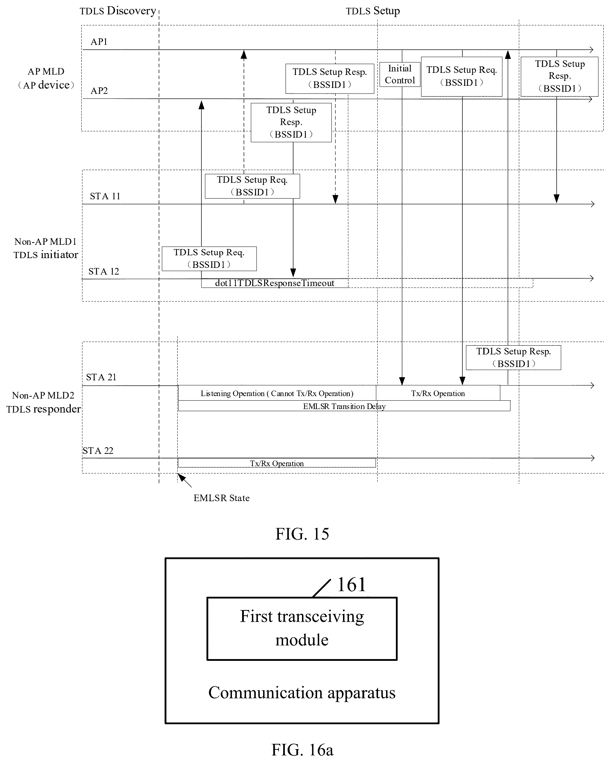

FIG.15 shows a third interactive schematic diagram of TDLS setup according to an embodiment of the present disclosure. The communication method shown in FIG.15 can be implemented jointly by an AP device and a TDLS initiator.

In step 1, the TDLS initiator sends a TDLS Setup Request frame to the AP device (AP MLD).

In step 2, after receiving the TDLS Setup Request frame, the AP device determines whether a TDLS responder (non-AP MLD) is in an EMLSR state and an AP device affiliated with the AP MLD which corresponds to the BSSID carried in the Link Identifier field in the TDLS Setup Request frame can send data to a non-AP STA (TDLS responder) in the EMLSR state which is affiliated with the non-AP MLD. There are following cases.

Case A: the TDLS responder does not operate in the EMLSR state or the TDLS responder is in the EMLSR state but a link where the non-AP STA (TDLS responder) affiliated with the non-AP MLD which corresponds to the BSSID carried in the Link Identifier field in the TDLS Setup Request frame is located receives the initial control frame sent by the AP device and the TDLS responder is in the transmit/receive operation, then the AP device sends the TDLS Setup Request frame to the TDLS responder.

Case B: if the AP device is unable to send the data to the TDLS responder, and the end time of dot11TDLSResponseTimeout is later than the end time of the current EMLSR transition delay of the TDLS responder, then after the TDLS responder switches all EMLSR links to the listening mode before the end of the EMLSR transition delay, the AP device sends the initial control frame on the link where the non-AP STA (TDLS responder) affiliated with the non-AP MLD which corresponds to the BSSID carried in the Link Identifier field in the TDLS Setup Request frame is located, and then sends the TDLS Setup Request frame.

Case C: if the AP device is unable to send the data to the TDLS responder, the AP device sends a temporary TDLS Setup Response frame to the TDLS initiator before the end of dot11TDLSResponseTimeout. The temporary TDLS Setup Response frame includes at least a Status Code field, optionally includes a TDLS Multi-Link element field, optionally includes the EML Control field, and optionally includes the EMLSR parameters update field. The Status Code field includes a first value, which is used to indicate that the TDLS response frame is a temporary response. The TDLS responder may delay sending the TDLS Setup Response frame due to being in the EMLSR mode.

The Common Info field of the TDLS Multi-link element includes an MLD MAC Address subfield and an EML Capabilities subfield. The MLD MAC Address subfield is set to the MAC address of the corresponding MLD of the TDLS responder, and the EML Capabilities subfield is used to inform the TDLS initiator of the EMLSR state of the TDLS responder, such as the EMLSR transition delay.

When the EMLSR parameters update control subfield in the EML control field is set to 1, the TDLS Setup Response frame includes an EMLSR parameters update field to indicate the EMLSR state update parameter of the TDLS responder, such as the updated EMLSR transition delay.

In step 3, corresponding to case A in the step 2, if the TDLS initiator does not receive the TDLS Setup Response frame for the current session before the end of dot11TDLSResponse Timeout, then the current TDLS setup procedure is terminated, and if the TDLS Setup Response frame for the current session is received, the response is made according to the Response frame identity.

In step 4, corresponding to case B in the step 2, if the TDLS initiator does not receive the TDLS Setup Response frame for the current session before the end of dot11TDLSResponseTimeout, then the current TDLS setup procedure is terminated, and if the TDLS Setup Response frame for the current session is received, the response is made according to the Response frame identity.

In step 5, corresponding to case C in the step 2, after the current frame exchange of the TDLS responder ends and before the EMLSR transition delay arrives, the AP device sends the initial control frame to the link where the non-AP STA (TDLS responder) affiliated with the non-AP MLD which corresponds to the BSSID carried in the Link Identifier field in the TDLS Setup Request frame is located, and then sends the TDLS Setup Request frame. If the TDLS initiator does not receive, before the end of dot11TDLSResponseTimeout, the temporary TDLS Setup Response frame sent by the AP device, it terminates the current TDLS setup procedure. If the TDLS initiator receives the temporary TDLS Setup Response frame sent by the AP device, but does not receive the TDLS Setup Response frame for the current session when the time identified by the EMLSR transition delay in the temporary TDLS Setup Response frame sent by the AP device arrives, it terminates the current TDLS setup procedure. If the TDLS Setup Response frame for the current session is received before the time identified by the EMLSR transition delay in the temporary TDLS Setup Response frame sent by the AP device arrives, the response is made according to the Response frame identity.

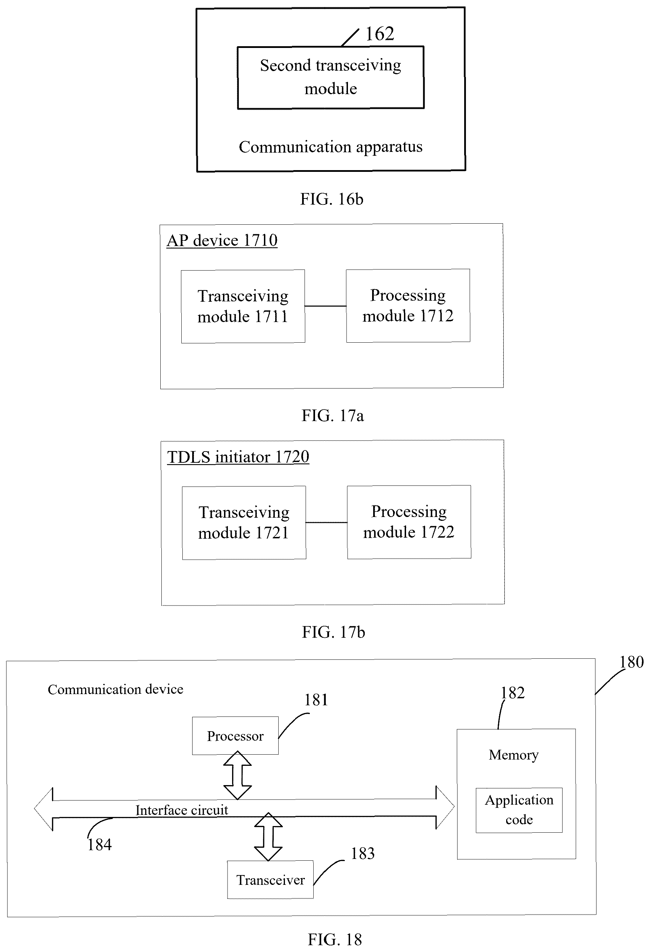

Embodiments of the present disclosure further provide an apparatus for implementing any of the above methods, such as an apparatus shown in FIG. 16a, which includes a first transceiving module 161 configured to implement steps performed by the AP device in any of the above methods, and an apparatus shown in FIG. 16b, which includes a second transceiving module 162 configured to implement steps performed by the TDLS initiator in any of the above methods.

It should be understood that the division of units or modules in the above device is only a logical functional division. In actual implementations, they may be completely or partially integrated into a single physical entity, or they may be physically separated. Furthermore, the units or modules in the device may be implemented in the form of a processor invoking software, for example, the device includes a processor connected to a memory storing an instruction, and the processor invokes the instruction stored in the memory to implement any of the above methods or to implement the functions of the units or modules of the device. The processor is, for example, a general-purpose processor, such as a central processing unit (CPU) or a microprocessor, and the memory is either internal or external to the device. Alternatively, the units or modules in the device may be implemented in the form of hardware circuits. The functions of some or all of the units or modules may be implemented through the design of the hardware circuits, where the hardware circuits may be understood as one or more processors. For example, in one implementation, the hardware circuit is an application-specific integrated circuit (ASIC), and the functions of some or all of the units or modules are implemented through the design of the logical relationships between the components within the circuit. In another implementation, for example, the hardware circuit described above may be implemented by using a programmable logic device (PLD), such as a field programmable gate array (FPGA), which may include a large number of logic gate circuits. The connection relationships between the logic gate circuits are configured through a configuration file, thereby implementing the functions of some or all of the units or modules described above. All units or modules of the above device may be implemented entirely by a processor invoking software, or entirely by hardware circuits, or partially by a processor invoking software and the rest by hardware circuits.

FIG. 17a is a schematic structural diagram of an AP device provided in an embodiment of the present disclosure. As shown in FIG. 17a, the AP device 1710 may include at least one of a transceiving module 1711, a processing module 1712, etc. In some embodiments, the transceiving module 1711 is configured to receive a Tunneled Direct Link Setup (TDLS) Setup Request frame sent by a TDLS initiator; and send the TDLS Setup Request frame to a TDLS responder according to a mode of the TDLS responder.

In some embodiments, the transceiving module 1711 is configured to perform at least one of communication steps such as sending and/or receiving performed by the AP device 1710 in any of the above methods (e.g., steps S41-S44, steps S51-S54, steps S61-S64, and steps S71-S75, but not limited thereto), and the processing module 1712 is configured to perform the processing procedures performed by the AP device 1710 in any of the above methods (e.g., determining whether the TDLS responder is in the EMLSR mode, determining the operation of the TDLS responder, comparing the end time of the first time interval and the end time of the second time interval, etc.), which will not be elaborated here.

FIG. 17b is a schematic structural diagram of an AP device provided in an embodiment of the present disclosure. As shown in FIG.17b, the TDLS initiator 1720 may include at least one of a transceiving module 1721, a processing module 1722, etc. In some embodiments, the transceiving module 1721 is configured to send a TDLS Setup Request frame to an Access Point (AP) device, and the AP device sends the TDLS Setup Request frame to the TDLS responder according to the mode of the TDLS responder.

In some embodiments, the transceiving module 1721 is configured to perform at least one of communication steps such as sending and/or receiving performed by the TDLS initiator 1720 in any of the above methods (e.g., sending the TDLS Setup Request frame, receiving the TDLS Setup Response frame, etc., but not limited thereto), and the processing module 1722 is configured to perform the processing procedures performed by the TDLS initiator 1720 in any of the above methods (e.g., determining the reception time of the first message frame and the TDLS Setup Response frame, etc.), which will not be elaborated here.

In some embodiments, the transceiving module may include a transmitting module and/or a receiving module, which may be separate or integrated. In some embodiments, the transceiving module may be interchangeable with a transceiver.

In some embodiments, the processing module may be a single module or may include multiple sub-modules. In some embodiments, the multiple sub-modules may each perform all or part of the steps required by the processing module. In some embodiments, the processing module may be interchangeable with a processor.

FIG. 18 is a schematic diagram of a structure of a communication device provided in an embodiment of the present disclosure. The communication device 180 may be an AP device, a TDLS responder, or a chip, a chip system, or a processor that supports a network device in implementing any of the above methods, or a chip, a chip system, or a processor that supports a terminal in implementing any of the above methods. The communication device may be configured to implement the method described in the above method embodiments. For details, please refer to the description of the above method embodiments.

As shown in FIG. 18, the communication device 180 includes one or more processors 181. The processor 181 may be a general-purpose processor or a dedicated processor, such as a baseband processor or a central processing unit (CPU). The baseband processor may be configured to process communication protocols and communication data. The CPU may be configured to control a communication device (e.g., a base station, a baseband chip, a terminal device, a terminal device chip, a DU or a CU, etc.), execute programs, and process program data. The communication device 180 is configured to perform any of the above methods.

In some embodiments, the communication device 180 further includes one or more memories 182 for storing instructions. Optionally, all or a part of the memory 182 may be located external to the communication device 180.

In some embodiments, the communication device 180 further includes one or more transceivers 183. When the communication device 180 includes one or more transceivers 183, the transceiver 183 performs at least one of the sending and/or receiving communication steps (e.g., steps S41 to S44, steps S51 to S54, steps S61 to S64, and steps S71 to S75 but not limited to these) in the methods described above, and the processor 8101 performs at least one of other steps (e.g., determining the mode of the TDLS responder and the end times of the first and second time intervals, etc., but not limited to these).

In some embodiments, the transceiver may include a receiver and/or a sender, which may be separated or integrated. Alternatively, terms such as the transceiver, the transceiver unit, the transceiver machine, and the transceiver circuit are interchangeable; terms such as the sender, the sending unit, the sender machine, and the sending circuit are interchangeable; and terms such as the receiver, the receiving unit, the receiver machine, and the receiving circuit are interchangeable.

In some embodiments, the communication device 180 may further include one or more interface circuits 184. Optionally, the interface circuit 184 is connected to the memory 182 and may be configured to receive signals from the memory 182 or other devices, and may be configured to send signals to the memory 182 or other devices. For example, the interface circuit 184 may read instructions stored in the memory 182 and send the instructions to the processor 181.

The communication device 180 described in the above embodiments may be the AP device or the TDLS initiator, but the scope of the communication device 180 described in the present disclosure is not limited thereto, and the structure of the communication device 180 may not be limited to FIG. 10. The communication device may be an independent device or a part of a larger device. For example, the communication device may be: (1) an independent integrated circuit (IC), or a chip, or a chip system or subsystem; (2) a collection of one or more ICs, optionally, the above IC collection may further include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others, etc.

The present disclosure also provides a storage medium. The storage medium described above stores an instruction. The instruction, when run on the communication device 180, causes the communication device 180 to perform any of the above methods. Optionally, the storage medium described above is an electronic storage medium. Optionally, the storage medium described above is a computer-readable storage medium, but is not limited thereto. The storage medium may also be a storage medium readable by other devices. Optionally, the storage medium described above may be a non-transitory storage medium, but is not limited thereto. The storage medium described above may also be a transient storage medium.

The present disclosure also provides a program product that, when executed by the communication device 180, causes the communication device 180 to perform any of the above methods. Optionally, the program product is a computer program product.

The present disclosure also provides a computer program that, when executed on a computer, causes the computer to perform any of the above methods. The above description is only preferred embodiments of the disclosure and an explanation of the applied technical principles. Those skilled in the art should understand that the scope involved in this disclosure is not limited to the technical solutions formed by the specific combination of the above technical features, and should also cover the other technical solutions, without departing from the above disclosed concept, formed by arbitrarily combining the above technical features or the equivalent features. For example, the above-mentioned features and the technical features disclosed in the disclosure (but not limited to) having similar functions are replaced with each other to form the technical solutions.

## Claims

1. A communication method, performed by an AP device, comprising:
receiving a Tunneled Direct Link Setup (TDLS) Setup Request frame sent by a TDLS initiator; and
sending the TDLS Setup Request frame to a TDLS responder.

2. The method according to claim 1, wherein sending the TDLS Setup Request frame to the TDLS responder comprises at least one of:
in a case where the TDLS responder does not operate in an Enhanced Multi-Link Single Radio (EMLSR) mode, directly sending the TDLS Setup Request frame to the TDLS responder;
in a case where the TDLS responder operates in the EMLSR mode and operates in transmit/receive operation, directly sending the TDLS Setup Request frame to the TDLS responder; or
in a case where the TDLS responder operates in the EMLSR mode and operates in listening operation, when all first station devices (STAs) operate(s) in the EMLSR mode and in the listening operation within a first time interval, sending an initial control frame and the TDLS Setup Request frame to the TDLS responder before the end of the first time interval, wherein the initial control frame is configured to trigger the TDLS responder to switch from the listening operation to the transmit/receive operation;
wherein the first STAs comprise the TDLS responder, the first STAs are affiliated with the same multi-link device, and the first time interval is a time interval corresponding to a current EMLSR transition delay of the TDLS responder.

3. The method according to claim 2, wherein in the case where the TDLS responder operates in the listening operation, the method further comprises:
when an end time of the first time interval is later than an end time of a second time interval, sending a first message frame to the TDLS initiator before the end of the second time interval, wherein the first message frame is configured to indicate that the TDLS responder delays sending the TDLS Setup Response frame;
wherein the second time interval is a time interval corresponding to dot11TDLSResponseTimeout of the TDLS initiator.

4. The method according to claim 3, wherein the initial control frame comprises a Multiple User Request to Send trigger frame or a Buffer Status Report Poll trigger frame.

5. The method according to claim 3, wherein the first message frame comprises a status code field, and when an identity value of the status code field is a first value, it is configured to indicate that the TDLS responder delays sending the TDLS Setup Response frame.

6. The method according to claim 3, wherein the first message frame comprises a TDLS Multi-Link element field, and the TDLS Multi-Link element field comprises at least one of a Multi-Link Device Medium Access Control Address subfield or an Enhanced Multi-Link Capabilities subfield; and
the Multi-Link Device Medium Access Control Address subfield is configured to indicate a medium access control address of a multi-link device to which the TDLS responder is affiliated, and the Enhanced Multi-Link Capabilities subfield is configured to indicate an EMLSR transition delay initially negotiated by the TDLS responder.

7. The method according to claim 6, wherein the TDLS Multi-Link element field comprises a Common Info field, and the Common Info field comprises at least one of the Multi-Link Device Medium Access Control subfield or the Enhanced Multi-Link Capabilities subfield.

8. The method according to claim 3, wherein the first message frame further comprises an Enhanced Multi-Link Control field, and the Enhanced Multi-Link Control field comprises an EMLSR parameters update control subfield; and
when an identity value of the EMLSR parameters update control subfield is a second value, it is configured to indicate that an EMLSR transition delay of the TDLS responder is updated, and when the identity value of the EMLSR parameters update control subfield is a third value, it is configured to indicate that the EMLSR transition delay of the TDLS responder is not updated.

9. The method according to claim 8, wherein the first message frame further comprises an EMLSR parameters update field, and the EMLSR parameters update field is configured to indicate the updated EMLSR transition delay of the TDLS responder.

10. The method according to claim 3, wherein the first message frame is a temporary TDLS Setup Response frame.

11. The method according to claim 1, wherein the method further comprises:
receiving a TDLS Setup Response frame sent by the TDLS responder; and
sending the TDLS Setup Response frame to the TDLS initiator.

12. A communication method, performed by a TDLS initiator, comprising:
sending a TDLS Setup Request frame to an Access Point (AP) device.

13. The method according to claim 12, wherein the method further comprises at least one of:
when a first message frame and a TDLS Setup Response frame are not received within a second time interval, terminating a TDLS link setup procedure;
when the TDLS Setup Response frame is received within the second time interval, responding to the TDLS Setup Response frame;
when the first message frame is received within the second time interval and the TDLS Setup Response frame is not received within a first time interval, terminating the TDLS link setup procedure; or
when the first message frame is received within the second time interval and the TDLS Setup Response frame is received within the first time interval, responding to the TDLS Setup Response frame,
wherein the first time interval is a time interval corresponding to a current EMLSR transition delay of a TDLS responder, and the second time interval is a time interval corresponding to dot11TDLSResponseTimeout of the TDLS initiator; and
the first message frame is configured to indicate that the TDLS responder delays sending the TDLS Setup Response frame.

14. The method according to claim 13, wherein the first message frame comprises a status code field, and when an identity value of the status code field is a first value, it is configured to indicate that the TDLS responder delays sending the TDLS Setup Response frame.

15. The method according to claim 13, wherein the first message frame comprises a TDLS Multi-Link element field, and the TDLS Multi-Link element field comprises at least one of a Multi-Link Device Medium Access Control Address subfield or an Enhanced Multi-Link Capabilities subfield; and
the Multi-Link Device Medium Access Control Address subfield is configured to indicate a medium access control address of a multi-link device to which the TDLS responder is affiliated, and the Enhanced Multi-Link Capabilities subfield is configured to indicate an EMLSR transition delay initially negotiated by the TDLS responder.

16. The method according to claim 15, wherein the TDLS Multi-Link element field comprises a Common Info field, and the Common Info field comprises at least one of the Multi-Link Device Medium Access Control subfield or the Enhanced Multi-Link Capabilities subfield.

17. The method according to claim 13, wherein the first message frame further comprises an Enhanced Multi-Link Control field; and
when an identity value of the Enhanced Multi-Link Control field is a second value, it is configured to indicate that an EMLSR transition delay of the TDLS responder is updated, and when the identity value of the Enhanced Multi-Link Control field is a third value, it is configured to indicate that the EMLSR transition delay of the TDLS responder is not updated.

18. The method according to claim 17, wherein the first message frame further comprises an EMLSR parameters update field, and the EMLSR parameters update field is configured to indicate the updated EMLSR transition delay of the TDLS responder.

19. The method according to claim 13, wherein the first message frame is a temporary TDLS Setup Response frame.

20. A communication apparatus, comprising:
a first transceiving module, configured to:
receive a Tunneled Direct Link Setup (TDLS) Setup Request frame sent by a TDLS initiator; and
send the TDLS Setup Request frame to a TDLS responder.

21. A communication apparatus, comprising:
a second transceiving module, configured to:
send a TDLS Setup Request frame to an Access Point (AP) device.

22. An AP device, comprising:
one or more processors;
wherein the AP device is configured to perform the communication method according to any one of claims 1-11.

23. A TDLS initiator, comprising:
one or more processors;
wherein the TDLS initiator is configured to perform the communication method according to any one of claims 12-19.

24. A communication system, comprising an AP device and a TDLS initiator, wherein the AP device is configured to implement the communication method according to any one of claims 1-11, and the TDLS initiator is configured to implement the communication method according to any one of claims 12-19.

25. A storage medium having instructions stored thereon, wherein the instructions, when running on a communication device, cause the communication device to perform the communication method according to any one of claims 1-11 or 12-19.
